# EUROPÄISCHE PATENTSCHRIFT

(11) **EP 3 125 200 B1**
(45) Veröffentlichungstag und Bekanntmachung des Hinweises auf die Patenterteilung: **15.06.2022**
(21) Anmeldenummer: 16174618.5
(22) Anmeldetag: 15.06.2016
(51) Int. Cl.: G07C 9/00, A47G 29/14

(54) **VERFAHREN ZUR UNTERSTÜTZUNG VON ZUGANGSKONTROLLAKTIONEN IN EINEM SYSTEM ZUR ZUSTELLUNG UND/ODER ABHOLUNG VON SENDUNGEN**
METHOD SUPPORTING ACCESS CONTROL ACTIONS IN A SYSTEM FOR DELIVERY AND/OR PICK-UP OF PARCELS
PROCÉDÉ ASSURANT DES ACTIONS DE CONTRÔLE D'ACCÈS DANS UN SYSTÈME DE DISTRIBUTION ET/OU DE RETRAIT DE COLIS

(30) Priorität: 10.07.2015 DE 102015111217
(43) Veröffentlichungstag der Anmeldung: 01.02.2017
(73) Patentinhaber: Deutsche Post AG, 53113 Bonn (DE)
(72) Erfinder: Wiechers, Ralph, 53508 Mayschoß (DE)
(74) Vertreter: Cohausz & Florack

(56) Entgegenhaltungen:
- WO-A1-03/065854
- DE-A1-102011 089 496
- GB-A- 2 517 527
- US-A1- 2011 130 134
- US-B2- 7 183 894

## Beschreibung

### Gebiet

Die Erfindung betrifft ein Verfahren, das eine Anforderung ausgewählter Aktionen ermöglicht sowie ein entsprechendes System. Die Erfindung betrifft insbesondere die Freigabe von Aktionen durch eine Zugangskontrollvorrichtung.

### Hintergrund

Zugangskontrollvorrichtungen finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder - ressourcen oder Serverdiensten.

Eine spezifische Anwendung von Zugangskontrollvorrichtungen bildet auch die Kontrolle des Zugangs von Personen zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Um Missbrauch und Diebstahl zu verhindern, muss der Paketkasten über ein Schloss verfügen. Sowohl der Zusteller als auch der Paketkastennutzer müssen dann mit physikalischen oder elektronischen Schlüsseln ausgestattet werden, um den Paketkasten benutzen zu können. Hierzu können beispielsweise digitale Schlüssel als Datensätze auf sog. Token gespeichert sein, beispielsweise auf Mobiltelefonen oder RFID-Tags, die damit als elektronische Schlüssel fungieren können.

Die Druckschrift US 7,183,894 B2 beschreibt eine Vorrichtung zur gemeinsamen Nutzung eines Eingangs eines Mehrfamilienhauses. Die Vorrichtung kontrolliert die Besuche von Vertretern für Haustürgeschäfte. Die Vorrichtung ermöglicht die Lieferung von Waren, die an eine der Wohnungen adressiert sind, unabhängig davon, ob ein Bewohner anwesend ist oder nicht. Registrierte Nutzer, wie Bewohner und Vertreter, denen Zugang gestattet wurde, nutzen eine IC-(integrated circuit) Karte, die Identifizierungsinformationen beinhaltet, um Zugang zu dem gemeinsam genutzten Eingang zu erhalten. Für jede Wohnung nutzt ein registrierter Nutzer ebenso die IC-Karte, um Familienidentifikationsinformationen oder Vertreteridentifikationsinformationen an eine Türsprecheinrichtung zu senden, wodurch die Tür für ein Familienmit-glied geöffnet wird. Eine Aufbewahrungsboxsteuereinheit mit Leseeinheit für IC-Karten steuert den Zugang zu zwei Aufbewahrungsboxen für registrierte Nutzer, die vor jeder Wohnung angebracht sind. Die Aufbewahrungsboxsteuereinheit ist oberhalb der Boxen angebracht oder in die Türsprecheinrichtung integriert.

### Zusammenfassung einiger beispielhafter Ausführungsformen der Erfindung

Der Erfindung liegt die Aufgabe zugrunde, die Nutzbarkeit von Aktionen zu erweitern, die von einer Steuereinheit veranlassbar sind, und/oder die Einsetzbarkeit einer Vorrichtung zu erweitern, die dazu eingerichtet ist, Berechtigungen von Anforderungen anderer Vorrichtungen zu prüfen.

Gemäß einem ersten, erfindungsgemäßen Aspekt wird ein Verfahren in einem System zur Zustellung und/oder Abholung von Sendungen offenbart, das folgendes umfasst:
- Erhalten einer Nachricht durch eine erste Vorrichtung von einer zweiten Vorrichtung, mit der die Veranlassung einer Aktion angefordert wird,
- Prüfen, durch die erste Vorrichtung, der Berechtigung der Anforderung anhand der erhaltenen Nachricht,
- Prüfen, durch die erste Vorrichtung, ob die Aktion eine Aktion ist, die von der ersten Vorrichtung durchzuführen oder zu veranlassen ist oder eine Aktion, die das Freigeben eines Zugangs zu einem gesicherten Bereich umfasst und die von einer von der ersten Vorrichtung separaten Steuereinheit zu veranlassen ist, wobei die erste Vorrichtung eine Zugangskontrollvorrichtung eines Paketkastens oder Paketbutlers oder eine Zugangskontrollvorrichtung für einen Paketkasten oder Paketbutler ist, und wobei die Steuereinheit eine Steuereinheit eines Heimautomatisierungssystems oder einer zentralen Schließanlage eines Gebäudes ist, und
- wenn festgestellt wird, dass eine Berechtigung vorliegt und dass die Aktion von der Steuereinheit zu veranlassen ist, Übermitteln einer Anforderung an die Steuereinheit, die Aktion zu veranlassen und
- Veranlassen der Aktion auf Erhalt der Anforderung der ersten Vorrichtung hin durch die Steuereinheit.

Es wird ferner eine Vorrichtung offenbart. Diese Vorrichtung entspricht der ersten Vorrichtung in dem Verfahren gemäß dem ersten Aspekt der Erfindung. Die Mittel dieser Vorrichtung können Hardware- und/oder Software-Komponenten umfassen. Die Mittel können beispielsweise mindestens einen Speicher mit Programmanweisungen eines Computerprogramms und mindestens einen Prozessor ausgebildet zum Ausführen von Programmanweisungen aus dem mindestens einen Speicher umfassen.

Gemäß dem ersten, erfindungsgemäßen Aspekt wird ferner ein System offenbart, das neben einer ersten Vorrichtung die von der ersten Vorrichtung separate Steuereinheit umfasst.

Gemäß einem nicht erfindungsgemäßen zweiten Aspekt wird ein Verfahren, ausgeführt durch einen Server, offenbart, das folgendes umfasst:
- Erhalten einer Nachricht, dass eine Berechtigung für ein Anfordern einer Aktion über eine erste Vorrichtung vergeben wird, wobei die Aktion von einer von der ersten Vorrichtung separaten Steuereinheit veranlassbar ist,
- Zusammenstellen von Informationen, die die Aktion identifizieren und die der ersten Vorrichtung ein Prüfen der Berechtigung ermöglichen, wobei die Informationen auf der erhaltenen Nachricht basieren, und
- Veranlassen einer Übermittlung der zusammengestellten Informationen an eine zweite Vorrichtung zum Berechtigen der zweiten Vorrichtung, eine Veranlassung der Aktion durch die Steuereinheit über die erste Vorrichtung anzufordern.

Gemäß dem nicht erfindungsgemäßen zweiten Aspekt wird ferner eine Vorrichtung offenbart, die Mittel zur Ausführung und/oder Steuerung einer beliebigen Ausführungsform des Verfahrens gemäß dem nicht erfindungsgemäßen zweiten Aspekt umfasst. Dabei können wiederum entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Vorrichtung entspricht dem Server aus dem Verfahren gemäß dem nicht erfindungsgemäßen zweiten Aspekt oder einer Komponente dieses Servers. Die Mittel können Hardware- und/oder Softwarekomponenten umfassen. Die Mittel können beispielsweise mindestens einen Speicher mit Programmanweisungen eines Computerprogramms und mindestens einen Prozessor ausgebildet zum Ausführen von Programmanweisungen aus dem mindestens einen Speicher umfassen.

Gemäß dem nicht erfindungsgemäßen zweiten Aspekt wird ferner ein System offenbart, das neben einer beliebigen Ausführungsform der Vorrichtung gemäß dem nicht erfindungsgemäßen zweiten Aspekt die Steuereinheit und/oder die erste Vorrichtung und/oder die zweite Vorrichtung umfasst.

Gemäß dem nicht erfindungsgemäßen zweiten Aspekt wird ferner ein Computerprogramm offenbart, das Programmanweisungen umfasst, die dazu ausgebildet sind, bei Ausführung durch mindestens einen Prozessor einen Server zu veranlassen, ein beliebiges Ausführungsbeispiel des Verfahrens gemäß dem nicht erfindungsgemäßen zweiten Aspekt auszuführen.

Unter Prozessoren können jeweils unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Jedes der Computerprogramme kann beispielsweise über ein Netzwerk wie das Internet, ein Telefon- oder Mobilfunknetz und/oder ein lokales Netzwerk verteilbar sein. Jedes der Computerprogramme kann zumindest teilweise Software und/oder Firmware eines Prozessors sein. Jedes der Computerprogramme kann beispielsweise auf einem jeweiligen computerlesbaren Speichermedium gespeichert sein, z.B. einem magnetischen, elektrischen, elektromagnetischen, optischen und/oder andersartigen Speichermedium. Das Speichermedium kann beispielsweise Teil eines Prozessors sein, beispielsweise ein (nicht-flüchtiger oder flüchtiger) Programmspeicher des Prozessors oder ein Teil davon; es kann aber auch eine von dem Prozessor separate Komponente sein.

Die Erfindung sieht also vor, dass eine erste Vorrichtung nicht nur dafür genutzt wird, um die Berechtigung für das Anfordern von Aktionen zu prüfen, die von der ersten Vorrichtung selber veranlasst werden können. Vielmehr wird eine solche erste Vorrichtung in die Lage versetzt, die Berechtigung auch für angeforderte Aktionen zu prüfen, die von einer anderen, räumlich getrennten Steuereinheit veranlasst werden können. Die für die Prüfung der Berechtigung erforderlichen Informationen können dabei zum Beispiel von einem Server zusammengestellt werden, etwa auf Anforderung eines Nutzers hin, der berechtigt ist, über die Steuereinheit zu verfügen.

Die gemäß dem ersten Aspekt an der ersten Vorrichtung erhaltene Nachricht kann beispielsweise verschlüsselte Daten als Prüfinformation enthalten. Das Prüfen der Berechtigung der Anforderung kann ein Entschlüsseln der verschlüsselten Daten und ein Vergleichen der entschlüsselten Daten mit nicht verschlüsselten Daten umfassen. Dabei können die nicht verschlüsselten Daten ebenfalls in der erhaltenen Nachricht enthalten, aus enthaltenen Daten hergeleitet und/oder in der ersten Vorrichtung gespeichert sein. Die verschlüsselten Daten können beispielsweise von dem Server gemäß dem nicht erfindungsgemäßen zweiten Aspekt bereitgestellt werden. Der Server kann für die Verschlüsselung beispielsweise einen ersten Schlüssel und die erste Vorrichtung für die Entschlüsselung einen zweiten Schlüssel eines Schlüsselpaars verwenden.

Die gemäß dem ersten Aspekt an der ersten Vorrichtung erhaltene Nachricht kann alternativ oder zusätzlich beispielsweise Daten und eine digitale Signatur für die Daten als Prüfinformation enthalten. Das Prüfen der Berechtigung der Anforderung kann ein Überprüfen der digitalen Signatur umfassen. Die Signatur sowie die signierten Daten können beispielsweise von dem Server gemäß dem nicht erfindungsgemäßen zweiten Aspekt bereitgestellt werden. Der Server kann für die Signatur beispielsweise einen ersten Schlüssel und die erste Vorrichtung für die Prüfung der Signatur einen zweiten Schlüssel eines Schlüsselpaars verwenden.

Sowohl beim Einsatz einer Verschlüsselung wie beim Einsatz einer digitalen Signatur kann das Schlüsselpaar ein asymmetrisches Schlüsselpaar sein. Für eine Verschlüsselung von Daten kann beispielsweise der erste Schlüssel ein öffentlicher Schlüssel und der zweite Schlüssel ein privater Schlüssel eines asymmetrisches Schlüsselpaars sein; für eine digitale Signatur kann die Zuordnung der Schlüssel umgekehrt sein. Der erste Schlüssel kann in beiden Fällen ausschließlich dem Server zur Verfügung stehen, und der zweite Schlüssel kann in beiden Fällen ausschließlich der ersten Vorrichtung zur Verfügung stehen. Ein asymmetrisches Schlüsselpaar kann beispielsweise nach dem RSA-Algorithmus erzeugt worden sein. Alternativ kann das Schlüsselpaar ein symmetrisches Schlüsselpaar sein. Das symmetrische Schlüsselpaar umfasst dann zweimal den gleichen Schlüssel, beispielsweise einen AES-Schlüssel. Der Schlüssel kann ausschließlich dem Server und der ersten Vorrichtung zur Verfügung stehen. Sowohl mit einem asymmetrischen Schlüsselpaar als auch mit einem symmetrischen Schlüsselpaar können die Daten, die verschlüsselt oder signiert werden, direkt verschlüsselt oder signiert werden. Stattdessen könnte auch zunächst ein Hashwert über die Daten oder einen Teil der Daten gebildet werden, und der Hashwert könnte dann mit dem ersten Schlüssel verschlüsselt oder signiert werden, um eine Prüfinformation zu erhalten. Bei der Prüfung kann die erste Einrichtung dann zunächst nach dem gleichen Algorithmus einen Hashwert über die vorhandenen Daten bilden. Im Falle einer Verschlüsselung kann bei Übereinstimmung der Originaldaten bzw. der Hashwerte von der Integrität (Unversehrtheit) der erhaltenen Daten ausgegangen werden sowie davon, dass sie von einem berechtigten, vertrauenswürdigen Server bereitgestellt wurden. Im Falle einer Signatur kann bei Bestätigung der Validität der Signatur von der Integrität der erhaltenen Daten ausgegangen werden sowie davon, dass sie von dem vertrauenswürdigen Server bereitgestellt wurde.

Eine Aktion, die von der Steuereinheit gemäß dem ersten Aspekt zu veranlassen oder gemäß dem nicht erfindungsgemäßen zweiten Aspekt veranlassbar ist, umfasst ein Freigeben eines Zugangs zu einem gesicherten Bereich. Der gesicherte Bereich kann dabei zum Beispiel kein Paketkastenaufnahmebereich, kein Briefkastenaufnahmebereich und kein Paketbutleraufnahmebereich sein. Die Aktion kann beispielsweise das Öffnen oder Freigeben einer Tür oder eines Tors umfassen. Eine solche Tür kann dabei zum Beispiel keine Paketkastentür und keine Briefkastentür sein. Das Freigeben eines gesicherten Bereichs kann dementsprechend auch keine Freigabe eines Paketbutlerdeckels umfassen. Der Zugang zu einem Paketkasten, Briefkasten und/oder Paketbutler könnte stattdessen von der ersten Vorrichtung gesteuert werden.

Bei der ersten Vorrichtung handelt es sich für beide Aspekte beispielsweise um eine Zugangskontrollvorrichtung eines Paketkastens oder Paketbutlers oder um eine Zugangskontrollvorrichtung für einen Paketkasten oder Paketbutler. An einer Zugangskontrollvorrichtung wird eine Zugangskontrolle durchgeführt, beispielsweise wird der Zugang zu Räumen von Gebäuden (z.B. Hotels, Bürokomplexe, Labore) oder Vorrichtungen, zu Veranstaltungen (z.B. Konzerte, Sportveranstaltungen), zu Funktionen (beispielsweise eines Computers, z.B. über ein Login), zu Ressourcen oder zu Diensten (beispielsweise zu einem von einem Server bereitgestellten Dienst, z.B. Online-Banking, Soziale Netzwerke, Emailkonten) kontrolliert. Beispiele des Zugangs zu Räumen von Vorrichtungen sind der Zugang zu Aufnahmeräumen von Aufnahmevorrichtungen, wie z.B. Schließfächern, Spinden, Kühlschränken, Warenzustellbehältern, Briefkästen, Paketkästen oder kombinierten Brief- und Paketkästen, die beispielsweise jeweils mit Türen verschlossen und durch Schließeinrichtungen gesichert sind.

Die erste Vorrichtung ist erfindungsgemäß eine Zugangskontrollvorrichtung eines Paketkastens oder Paketbutlers oder eine Zugangskontrollvorrichtung für einen Paketkasten oder Paketbutler und kann für beide Aspekte beispielsweise ortsfest angebracht sein. Sie kontrolliert den Zugang zu einem Paketkasten oder einem Paketbutler und kann zum Beispiel in oder an einem Paketkasten angebracht sein und/oder ein Schließsystem eines Paketkastens sein und/oder in oder an einem Paketbutler angebracht sein und/oder ein Schließsystem eines Paketbutlers sein. Sie könnte auch ein Modul für ein solches Schließsystem sein. Kontrolliert die erste Vorrichtung den Zugang zu einer Aufnahmeeinheit, so kann für einige Ausführungsformen dennoch vorgesehen sein, dass die erste Vorrichtung getrennt von der Aufnahmeeinheit angeordnet werden kann.

Umfasst die erste Vorrichtung mindestens einen Prozessor, so kann der mindestens eine Prozessor mindestens eine Schließeinrichtung, beispielsweise ein elektronisch ansteuerbares Schloss, steuern, und somit beispielsweise ein Öffnen und/oder Schließen des Schlosses bewirken können. Das Schloss kann beispielsweise mit einer Fallenfunktion ausgestattet sein, so dass die erste Vorrichtung beispielsweise nur eine Öffnung des Schlosses (beispielsweise durch ein zumindest zeitweises Überführen der Falle in eine Offen-Stellung, beispielsweise durch einen elektrischen Motor) steuern muss, während ein Schließen des Schlosses manuell durch einen Nutzer geschieht, indem dieser die Fallenfunktion nutzt und beispielsweise durch Zudrücken einer Tür die Falle aus der Zu-Stellung in die Offen-Stellung verdrängt und nach dem Beenden des Zudrückens die Falle automatisch wieder in die Zu-Stellung zurückkehrt, beispielsweise durch Federvorbelastung.

Die erste Vorrichtung kann eine solche Schließeinrichtung und/oder weitere Komponenten optional auch umfassen.

Die erste Vorrichtung kann für beide Aspekte beispielsweise mindestens eine Schließeinrichtung, mindestens einen Prozessor, mindestens einen Speicher, und mindestens zwei unterschiedliche Kommunikationsschnittstellen umfassen. Eine erste Kommunikationsschnittstelle könnte zum Beispiel eine Bluetooth, Near Field Communication (NFC) oder Radio Frequency Identification (RFID) Schnittstelle sein, und eine zweite Kommunikationsschnittstelle könnte zum Beispiel eine Schnittstelle für einen Zugang zu einem lokalen Funknetz (Wireless Local Area Network WLAN) oder einem drahtgebundenen lokalen Netz (Local Area Network LAN) sein.

Die erste Vorrichtung kann für beide Aspekte beispielsweise ein erstes Kommunikationsprotokoll für das Empfangen der Nachricht von der zweiter Vorrichtung und ein zweites, anderes Kommunikationsprotokoll für das Übermitteln der Anforderung an die Steuereinheit nutzen und/oder ein funkbasiertes Kommunikationsprotokoll für das Empfangen der Nachricht von der zweiter Vorrichtung nutzen und/oder ein funkbasiertes oder drahtgebundenes Kommunikationsprotokoll für das Übermitteln der Anforderung an die Steuereinheit nutzen.

Ein von der ersten Vorrichtung für das Empfangen von Nachrichte von einer zweiten Vorrichtung genutztes funkbasiertes Kommunikationsprotokoll kann beispielsweise auf eine Kommunikation mit Vorrichtungen in der näheren Umgebung der ersten Vorrichtung (beispielsweise weniger als 10 m, 50m oder 100 m) eingerichtet sein. Eine solche drahtlose Kommunikation der ersten Vorrichtung kann beispielsweise auf eine Kommunikation mittels RFID und/oder NFC und/oder Bluetooth (z.B. Bluetooth Version 2.1 und/oder 4.0) beschränkt sein. RFID und NFC- sind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich. Eine Kommunikation der ersten Vorrichtung mit der Steuereinheit kann beispielsweise auf über ein WLAN oder ein LAN erfolgen.

Die erste Vorrichtung kann für beide Aspekte beispielsweise derart eingerichtet sein, dass sie über keinen Anschluss an ein Mobilfunknetz verfügt. Die erste Vorrichtung kann stattdessen optional beispielsweise über eine Universal Serial Bus (USB) Schnittstelle verfügen, über die die erste Vorrichtung beispielsweise gewartet werden kann.

Die erste Vorrichtung kann für beide Aspekte beispielsweise batteriebetrieben sein und beispielsweise über keinen oder keinen ständigen Stromanschluss verfügen.

Die zweite Vorrichtung kann für beide Aspekte beispielsweise ein tragbares elektronisches Gerät sein.

Ein solches Gerät kann beispielsweise ein tragbares elektronisches Gerät eines Zustellers sein. Ein solches Gerät wird nachfolgend auch als "Zustellergerät" bezeichnet. Das Zustellergerät verfügt dann beispielsweise über eine graphische Benutzerschnittstelle und einer Funktionalität zur drahtlosen Erfassung von Information von Paketen, beispielsweise durch optisches Scannen von Paketetiketten und/oder Erfassen von Informationen von Paketen über Funk (z.B. RFID) oder magnetische Felder (z.B. NFC), beispielsweise wenn das Paket einen RFID-Tag oder NFC-Tag aufweist. Das Zustellergerät kann beispielsweise die Fähigkeit aufweisen, über ein zellulares Mobilfunknetz zu kommunizieren, dies kann aber auch nicht der Fall sein. Das Zustellergerät kann beispielsweise über die Fähigkeit verfügen, über WLAN und/oder über ein zellulares Mobilfunksystem (insbesondere über GPRS) zu kommunizieren. Das Zustellergerät kann beispielsweise über die Fähigkeit verfügen, über Bluetooth und/oder NFC zu kommunizieren, beispielsweise auch durch entsprechende Nachrüstung. Ein Beispiel für ein solches Zustellergerät ist ein Handscanner. Ein Zusteller kann generell ein Zusteller von beliebigen Sendungen sein, z.B. von Paketen und/oder Briefen.

Alternativ kann ein tragbares elektronisches Gerät beispielsweise einem Nutzer (z.B. einem Nutzer hinsichtlich der ersten Vorrichtung oder einer mit dieser assoziierten Vorrichtung) zugeordnet sein. Ein solches Gerät wird nachfolgend als "Nutzergerät" bezeichnet. Das Nutzergerät kann beispielsweise verwendet werden, um Zugangsberechtigungsinformation an die erste Vorrichtung zu kommunizieren, um Zugang an der ersten Vorrichtung oder an einer mit der ersten Vorrichtung assoziierten Vorrichtung zu erhalten. Das Nutzergerät weist beispielsweise eine graphische Benutzerschnittstelle und/oder eine eigene Stromversorgung auf. Das Nutzergerät ist beispielsweise ein Mobiltelefon, ein Persönlicher Digitaler Assistent (PDA), ein Medienabspielgerät (z.B. ein iPod), oder ein Navigationsgerät. Das Nutzergerät kann beispielsweise einem Paketkastennutzer, also beispielsweise einem Besitzer des Paketkastens, oder einer Person, die über den Paketkasten Pakete empfangen oder zur Abstellung durch einen Zusteller einlegen darf gehören. Ein Zusteller wird in diesem Sinne nicht als Nutzer verstanden. Das Nutzergerät ist beispielsweise zur drahtlosen Kommunikation mit der ersten Vorrichtung eingerichtet, beispielsweise über Bluetooth und/oder RFID und/oder NFC. Das Nutzergerät verfügt beispielsweise über die Fähigkeit, über ein zellulares Mobilfunknetz (z.B. ein auf dem Global System for Mobile Communication (GSM), dem Universal Mobile Telecommunications System (UMTS) und/oder dem Long Term Evolution (LTE) System basierenden Mobilfunknetz) zu kommunizieren.

Eine Kommunikation zwischen der ersten Vorrichtung und der zweiten Vorrichtung kann auf verschiedene Weisen initiiert werden. So kann beispielsweise vorgesehen sein, dass die zweite Vorrichtung eine Kontaktanfrage an die erste Vorrichtung aussendet, die diese dann annehmen kann. Das Aussenden einer solchen Kontaktanfrage kann beispielsweise auf eine Nutzeraktion oder einen anderen Trigger hin erfolgen. Alternativ könnte die erste Vorrichtung beispielsweise ständig ein Signal aussenden. Bei Einsatz von Bluetooth könnte ein solches Signal beispielsweise ein immer gleiches Bluetooth oder Bluetooth Low Energy Signal sein. Die zweite Vorrichtung empfängt das Signal, sobald es in Empfangsnähe kommt, und kann dann auf den Empfang dieses Signal reagieren.

Die Steuereinheit kann für beide Aspekte beispielsweise ortsfest angebracht sein. Erfindungsgemäß ist die Steuereinheit die Steuereinheit eines Heimautomatisierungssystems oder einer zentralen Schließanlage eines Gebäudes. Sie kann zum Beispiel ein Server eines Hausautomatisierungssystems oder - allgemeiner - eines Heimautomatisierungssystems sein, oder auch eine Komponente eines solchen Servers. Ein Server eines Hausautomatisierungssystems kann verschiedene Aktoren eines Hauses und ein Server eines Heimautomatisierungssystems verschiedene Aktoren eines Hauses oder einer Wohneinheit eines Hauses steuern. Solche Aktoren können Schließeinrichtungen für beliebige abgegrenzte Bereiche umfassen, die eine Tür oder ein Tor für die Öffnung durch einen Nutzer freigeben können, oder die eine Tür oder ein Tor motorbetrieben öffnen können. Solche Aktoren können ferner Thermostate, Lichtschalter und diverse andere Geräte umfassen. Die Steuereinheit kann ferner zum Beispiel ein Server einer zentralen Schließanlage für ein Gebäude oder eine Anlage sein, oder auch eine Komponente eines solchen Servers. Eine zentrale Schließanlage ermöglicht einen Zugang zu verschiedenen Bereichen durch Ansteuerung verschiedener Schließeinrichtungen, wobei unterschiedliche Berechtigungen für unterschiedliche Bereiche vorliegen können. So könnte in einem Bürogebäude die Öffnung einer Gebäudetür und eines Garagentor von allen Nutzern mittels eines entsprechend konfigurierten Nutzergeräts angefordert werden, die Öffnung von Türen zu unterschiedlichen Büroeinheiten aber nur von Nutzern, die diesen Büros zugeordnet sind.

Die Berechtigung für ein Anfordern einer Aktion kann sich beispielsweise nicht nur auf die Aktion selber beziehen, die angefordert werden darf, sondern auch den Umfang der Berechtigung bezüglich einer solchen Anforderung.

Bezüglich beider Aspekte kann die Berechtigung für ein Anfordern einer Aktion zeitlich limitiert sein. Ein entsprechender Zeitraum kann fest vorgegeben oder frei wählbar sein. Er kann auch frei wählbar mit einem maximal zulässigen Wert für die Länge des Zeitraums und/oder für den Endpunkt des Zeitraums sein. Die zeitliche Limitierung kann zum Beispiel bezüglich Beginn und Ende taggenau, stundengenau, minutengenau oder sekundengenau vorgegeben werden. Der mögliche Zeitraum kann auch von der Art der zweiten Vorrichtung abhängig sein. So kann ein Zeitraum für ein Zustellergerät zum Beispiel auf maximal einen Tag gesetzt werden, und der Zeitraum für ein Nutzergerät zum Beispiel auf maximal ein Jahr. Der Zeitraum kann zum Beispiel auch nur durch einen Endpunkt für die Berechtigung definiert werden, so dass der früheste Beginn des Zeitraums durch den Zeitpunkt der Erteilung der Berechtigung gegeben ist. Der Zeitraum kann auch auf einem vorgegebenen (optional vorrichtungsabhängigen) Standardwert basieren, der durch die Nachricht, dass eine Berechtigung für ein Anfordern einer Aktion über eine erste Vorrichtung vergeben wird, geändert werden kann. Für einige Anwendungsfällte kann es auch möglich sein, einen sich täglich oder an bestimmten Tagen wiederholenden Zeitabschnitt zu definieren, in dem das Anfordern einer Aktion stattfinden darf.

Für den ersten Aspekt kann die an der ersten Vorrichtung von der zweiten Vorrichtung empfangene Nachricht beispielsweise zumindest einen Parameter enthalten, durch den die Berechtigung zeitlich limitiert wird. Für den nicht erfindungsgemäßen zweiten Aspekt können die am Server zusammengestellten Informationen für die zweite Vorrichtung beispielsweise zumindest einen Parameter enthalten, durch den die Berechtigung zeitlich limitiert wird. Notwendige Bedingungen zur Feststellung einer Berechtigung kann dann sein, dass eine Prüfung der Berechtigung durch die erste Vorrichtung ergibt, dass die zeitliche Information einer Uhr der ersten Vorrichtung in einem von dem zumindest einen Parameter definierten Zeitraum liegt.

Wenn gemäß dem ersten Aspekt von der ersten Vorrichtung festgestellt wird, dass die Aktion eine Aktion ist, die von der ersten Vorrichtung durchzuführen oder zu veranlassen ist, so kann die erste Vorrichtung daraufhin die Aktion durchführen oder veranlassen. Die Aktion kann beispielsweise durch Absetzen eines Steuersignals an einen Aktor veranlasst werden, beispielsweise an eine Schließeinrichtung, um beispielsweise eine Tür zu einem oder mehreren Räumen (z.B. Aufnahmeräume einer Aufnahmevorrichtung) zu entriegeln und/oder zu öffnen um den Zugang zu den ein oder mehreren Räumen zu ermöglichen. Der Zugang kann in unterschiedlichem Ausmaß gewährt werden, beispielsweise können bei Vorhandensein von mehreren Aufnahmeräumen lediglich Zugang zu bestimmten Aufnahmeräumen oder Gruppen von Aufnahmeräumen gewährt werden. Das Ausmaß des Zugangs kann beispielsweise durch einen Zugangsberechtigungsparameter in der erhaltenen Nachricht definiert sein. Erfindungsgemäß ist die erste Vorrichtung eine Zugangskontrollvorrichtung eines Paketkastens oder Paketbutlers oder eine Zugangskontrollvorrichtung für einen Paketkasten oder Paketbutler ist, welche zum Beispiel den Zugang zu einem Paketkasten mit einem Fach oder mehreren Fächern oder einem kombinierten Paket- und Briefkasten. Beispielsweise kann die Ver- und/oder Entriegelung von mindestens einer Tür zu mindestens einem Fach des Behälters kontrolliert werden.

Gemäß dem ersten Aspekt veranlasst die Steuereinheit auf Erhalt der Anforderung von der ersten Vorrichtung hin die von der Steuereinrichtung zu veranlassende Aktion. Die erste Vorrichtung kann zum Beispiel auf genereller Basis bei der Steuereinrichtung als dazu berechtigt registriert sein, die Veranlassung von Aktionen anzufordern. Da die Berechtigung zu der Anforderung bereits durch die erste Vorrichtung geprüft wurde, ist eine weitere Prüfung durch die Steuereinrichtung dann nicht erforderlich.

Die von dem Server gemäß dem nicht erfindungsgemäßen zweiten Aspekt zusammengestellten Informationen können an eine zweite Vorrichtung direkt oder indirekt, also beispielsweise über mindestens eine weitere Vorrichtung, übermittelt werden. Die zusammengestellten Informationen können beispielsweise an die zweite Vorrichtung kommuniziert werden, indem sie beispielsweise über ein Netzwerk an einen Computer übertragen werden, der die Informationen dann drahtgebunden (z.B. über eine Docking-Station) oder drahtlos an ein Zustellgerät, insbesondere einen Handscanner, (als Beispiel einer zweiten Vorrichtung) überträgt, oder indem sie auf einen Tag, insbesondere einem NFC-Tag, (als Beispiel einer zweiten Vorrichtung) gespeichert werden, oder indem sie über eine beispielsweise gesicherte Verbindung an eine Software ("App") auf einem Nutzergerät, insbesondere einem Mobiltelefon, (als Beispiel einer zweiten Vorrichtung) übertragen und dort gespeichert werden.

Die Erfindung findet Anwendung in einem System zur Zustellung und/oder Abholung von Sendungen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Dabei zeigt:
- Fig.1:: eine schematische Darstellung einer beispielhaften Ausführungsform einer Vorrichtung gemäß dem ersten Aspekt der vorliegenden Erfindung,
- Fig. 2:: eine schematische Darstellung einer beispielhaften Ausführungsform einer Vorrichtung gemäß dem nicht erfindungsgemäßen zweiten Aspekt,
- Fig. 3:: eine schematische Darstellung einer beispielhaften Ausführungsform eines Systems gemäß der vorliegenden Erfindung,
- Fig. 4:: ein Flussdiagramm mit beispielhaften Operationen in dem System aus Figur 3 gemäß dem nicht erfindungsgemäßen zweiten Aspekt und
- Fig. 5:: ein Flussdiagramm mit beispielhaften Operationen in dem System aus Figur 3 gemäß dem ersten Aspekt der vorliegenden Erfindung.

### Detaillierte Beschreibung einiger beispielhafter Ausführungsformen der Erfindung

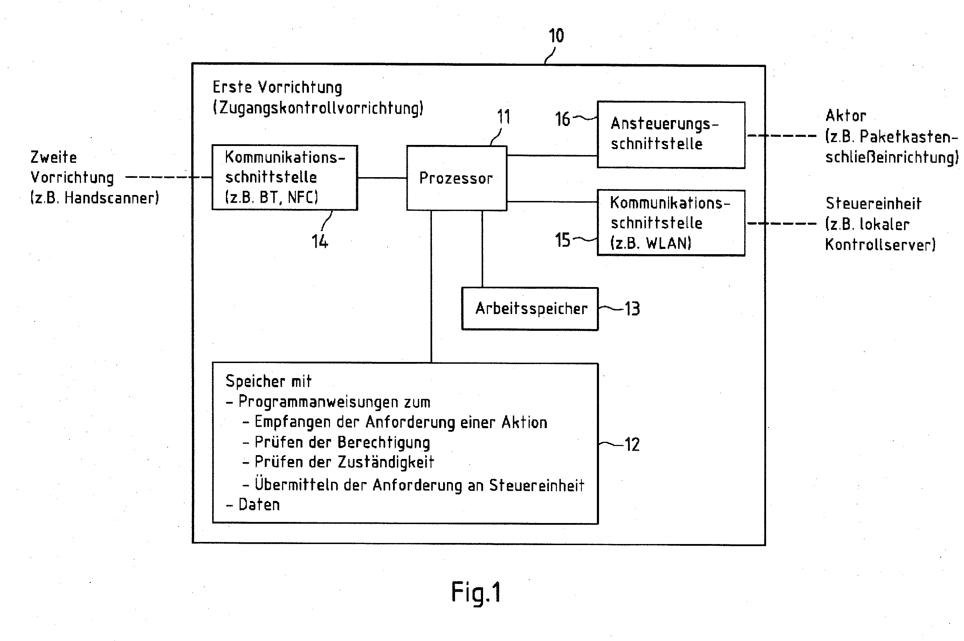

Figur 1 ist eine schematische Darstellung einer beispielhaften Ausführungsform einer Vorrichtung 10 gemäß dem ersten Aspekt der vorliegenden Erfindung.

Die Vorrichtung 10 wird als erste Vorrichtung bezeichnet. Sie ist eine Zugangskontrollvorrichtung, die die Berechtigung einer Anforderung von Aktionen durch eine zweite Vorrichtung prüft, die von der ersten Vorrichtung 10 oder von einer von der ersten Vorrichtung 10 separaten Steuereinheit veranlasst werden können.

Die erste Vorrichtung 10 umfasst beispielhaft einen Prozessor 11 und verbunden mit dem Prozessor 11 einen ersten Speicher als Programm- und Datenspeicher 12, einen zweiten Speicher als Arbeitsspeicher 13, eine erste Kommunikationsschnittstelle 14, eine zweite Kommunikationsschnittstelle 15 und eine Ansteuerungsschnittstelle 16. Es versteht sich, dass für die gleichen und/oder zusätzliche Aufgaben statt eines Prozessors 11 auch mehrere Prozessoren, statt jeweils eines Speichers 12, 13 auch mehrere Speicher und statt einer Ansteuerungsschnittstelle 16 auch mehrere Ansteuerungsschnittstellen vorgesehen sein können.

Der Prozessor 11 kann beispielsweise ein Mikroprozessor sein, der auch eine Uhr umfasst.

Der Speicher 12 kann beispielsweise ein Festwertspeicher (Read Only Memory ROM) sein, der nur einen Lesezugriff gestattet. Hierdurch kann die Vorrichtung 10 vor Manipulationen geschützt werden. Der Speicher 12 speichert Programmanweisungen von mindestens einem Computerprogramm. Das Computerprogramm kann ein beispielhaftes Computerprogramm gemäß dem ersten Aspekt der Erfindung sein, und Speicher 12 kann ein beispielhaftes Speichermedium gemäß dem ersten Aspekt der Erfindung sein. Die Programmanweisungen können Programmanweisungen zum Prüfen einer Berechtigung von einer zweiten Vorrichtung Aktionen anzufordern, Programmanweisungen zum Prüfen, ob die angeforderten Aktionen von der ersten Vorrichtung 10 selber oder von einer Steuereinheit veranlasst werden können, Programmanweisungen zum Veranlassen von Aktionen durch Aktoren und Programmanweisungen zum Übermitteln einer berechtigten Anforderung einer Aktion an die Steuereinheit umfassen. Eine Vorrichtung - z. B. die Vorrichtung 10 oder eine die Vorrichtung 10 enthaltende Vorrichtung - wird veranlasst entsprechende Aktionen auszuführen, wenn der Prozessor 11 die Programmanweisungen ausführt. Neben Programmanweisungen können in dem Programmspeicher auch Werte verschiedener Parameter gespeichert sein, wie eine der Vorrichtung 10 zugeordnete MAC-Adresse und/oder eine andere Kennung (z.B. Schlosskennung LockID) der Vorrichtung 10 oder ein Schlüssel S2 zum Entschlüsseln von erhaltenen Nachrichten bzw. zum Verifizieren von digitalen Signaturen. Solche Parameterwerte können aber alternativ auch in einem zusätzlichen, nicht dargestellten nicht-flüchtigen Schreib-Lese-Speicher (Random Access Memory RAM) gespeichert sein. Hier könnten dann zusätzlich veränderliche und bei Fabrikation der Vorrichtung 10 noch nicht bekannte Parameter, wie beispielsweise ein Passwort für ein WLAN, gespeichert werden. Weiter alternativ kann aber auch Speicher 12 selber als nicht-flüchtigen Schreib-Lese-Speicher ausgebildet sein. Hierdurch werden zum Beispiel Aktualisierungen der Programmanweisungen ermöglicht bzw. erleichtert.

Der Arbeitsspeicher 13 kann beispielsweise ein flüchtiger Schreib-Lese-Speicher (RAM) sein. Hier können zum Beispiel erhaltene Daten, aktuell genutzte Programmanweisungen und Zwischenergebnisse gespeichert werden, solange sie benötigt werden.

Die erste Kommunikationsschnittstelle 14 kann beispielsweise eine Schnittstelle für eine Bluetooth (BT) oder NFC basierte Kommunikation sein. Sie ist für eine Kommunikation mit einer zweiten Vorrichtung vorgesehen. Die zweite Vorrichtung kann eine beliebige tragbare elektronische Vorrichtung sein, beispielsweise ein Handscanner eines Zustellers oder ein Mobiltelefon eines Nutzers. Es versteht sich, dass die erste Vorrichtung 10 über diese Schnittstelle 14 mit diversen zweiten Vorrichtungen kommunizieren kann.

Die zweite Kommunikationsschnittstelle 15 kann beispielsweise eine Schnittstelle für eine WLAN basierte Kommunikation sein. Sie ist für eine Kommunikation mit einer Steuereinheit vorgesehen. Die Steuereinheit kann beispielsweise ein lokaler Kontrollserver für die Ansteuerung verschiedener lokaler Aktoren sein.

Die Ansteuerungsschnittstelle 16 kann beispielsweise eine Schnittstelle zu mindestens einem Aktor sein, der von der ersten Vorrichtung 10 gesteuert wird. Ein solcher Aktor kann beispielsweise eine elektronisch steuerbare Schließeinrichtung, etwa für eine Tür eines Paketkastens, sein. Umfasst der Paketkasten mehrere Fächer, so kann über die gleiche Ansteuerungsschnittstelle 16 oder über mehrere Ansteuerungsschnittstellen eine jeweilige elektronisch steuerbare Schließeinrichtung für jede Tür jedes der Fächer angesteuert werden.

Die erste Vorrichtung 10 kann auch weitere Komponenten enthalten. Beispielsweise könnte die erste Vorrichtung 10 ein Schließsystem sein, das unter anderem auch eine elektronisch steuerbare Schließeinrichtung enthält, oder eine Aufbewahrungsvorrichtung, wie ein Paketkasten, die ein solches Schließsystem und einen dadurch gesicherten Raum umfasst. Alternativ könnte die erste Vorrichtung 10 auch weniger Komponenten enthalten, etwa nur den Prozessor 11 und die Speicher 12 und 13. Sie könnte beispielsweise ein Modul für eine Zugangskontrollvorrichtung sein, die zusätzlich die Schnittstellen 14, 15 und 16 enthält.

Figur 1 kann auch als Darstellung eines Systems gemäß dem ersten Aspekt verstanden werden, das die erste Vorrichtung 10 und die von der ersten Vorrichtung 10 separate Steuereinheit umfasst.

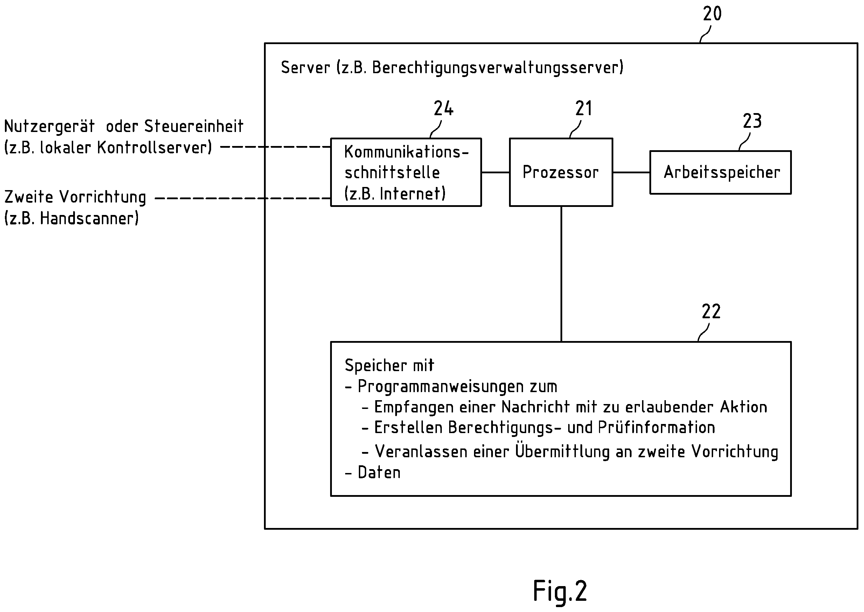

Figur 2 ist eine schematische Darstellung einer beispielhaften Ausführungsform einer Vorrichtung 20 gemäß dem nicht erfindungsgemäßen zweiten Aspekt.

Die Vorrichtung 20 kann beispielsweise ein Berechtigungsverwaltungsserver sein, der eine zweite Vorrichtung mit einer Berechtigung versieht, über eine erste Vorrichtung 10 das Veranlassen einer Aktion durch eine Steuereinheit anzufordern.

Die Vorrichtung 20 umfasst beispielhaft einen Prozessor 21 und verbunden mit dem Prozessor 21 einen ersten Speicher 22 als Daten- und Programmspeicher, einen zweiten Speicher 23 als Arbeitsspeicher und eine Kommunikationsschnittstelle 24. Es versteht sich, dass für die gleichen und/oder zusätzliche Aufgaben statt eines Prozessors 21 auch mehrere Prozessoren und statt jeweils eines Speichers 22, 23 auch mehrere Speicher vorgesehen sein können.

Der Prozessor 21 kann beispielsweise ein digitaler Signalprozessor sein.

Der Speicher 22 kann beispielsweise ein nicht-flüchtigen Schreib-Lese-Speicher sein. Der Programmspeicher speichert Programmanweisungen von mindestens einem Computerprogramm. Das Computerprogramm kann ein beispielhaftes Computerprogramm gemäß dem nicht erfindungsgemäßen zweiten Aspekt sein, und Speicher 22 kann ein beispielhaftes Speichermedium gemäß dem zweiten Aspekt der Erfindung sein. Die Programmanweisungen können Programmanweisungen zum Erhalten einer Nachricht umfassen. Die Nachricht kann beinhalten, dass eine Berechtigung für ein Anfordern einer von einer Steuereinheit veranlassbaren Aktion vergeben werden soll, wobei die Aktion bei der Steuereinheit über eine erste Vorrichtung anforderbar ist. Sie können ferner Programmanweisungen zum Zusammenstellen von Informationen, die die Aktion identifizieren und die der ersten Vorrichtung ein Prüfen der Berechtigung ermöglichen, umfassen. Die zusammengestellten Informationen basieren zumindest zum Teil auf der erhaltenen Nachricht und können als ein digitaler Schlüssel angesehen werden. Die Programmanweisungen können ferner Programmanweisungen zum Veranlassen einer Übermittelung des Schlüssels an eine geeignete zweite Vorrichtung umfassen, damit diese die Aktion über die erste Vorrichtung anfordern kann. Ein Server - z. B. die Vorrichtung 20 oder ein die Vorrichtung 20 enthaltender Server - wird veranlasst entsprechende Aktionen auszuführen, wenn der Prozessor 21 die Programmanweisungen aus Speicher 22 ausführt. Neben Programmanweisungen können in dem Speicher 22 auch verschiedener Daten gespeichert sein. Solche Daten können beispielsweise eine Zuordnung verschiedener Parameterwerte zu verschiedenen ersten Vorrichtungen 10 umfassen. So könnte etwa einer jeweiligen Kennung (z.B. Schlosskennung LockID) einer ersten Vorrichtung 10 ein Schlüssel S1 zum Verschlüsseln oder Signieren von Nachrichten für die erste Vorrichtung 10, eine MAC-Adresse der ersten Vorrichtung 10 und/oder eine Straßenadresse der ersten Vorrichtung 10 zugeordnet sein. Solche Daten können aber alternativ auch in einem zusätzlichen, nicht dargestellten nicht-flüchtigen Schreib-Lese-Speicher gespeichert sein.

Der Arbeitsspeicher 23 kann beispielsweise wiederum ein flüchtiger Schreib-Lese-Speicher sein, in dem erhaltene Daten, aktuell genutzte Programmanweisungen und Zwischenergebnisse gespeichert werden können, solange sie benötigt werden.

Die Kommunikationsschnittstelle 24 kann beispielsweise eine TCP/IP Schnittstelle sein, die eine direkte oder indirekte Kommunikation mit diversen anderen Einrichtungen über das Internet ermöglicht, zum Beispiel mit tragbaren elektronischen Geräten und anderen Servern.

Die Vorrichtung 20 kann beliebige weitere Komponenten enthalten, wie etwa eine Nutzerschnittstelle für Wartungsaufgaben. Alternativ könnte die Vorrichtung 20 auch weniger Komponenten enthalten, etwa nur den Prozessor 21 und die Speicher 22 und 23. Sie könnte beispielsweise ein Modul für einen Server sein, der zusätzlich die Schnittstelle 24 enthält.

Figur 2 kann auch als Darstellung eines Systems gemäß dem nicht erfindungsgemäßen zweiten Aspekt verstanden werden, das die Vorrichtung 20 und außerdem die zweite Vorrichtung und/oder die Steuereinheit umfasst.

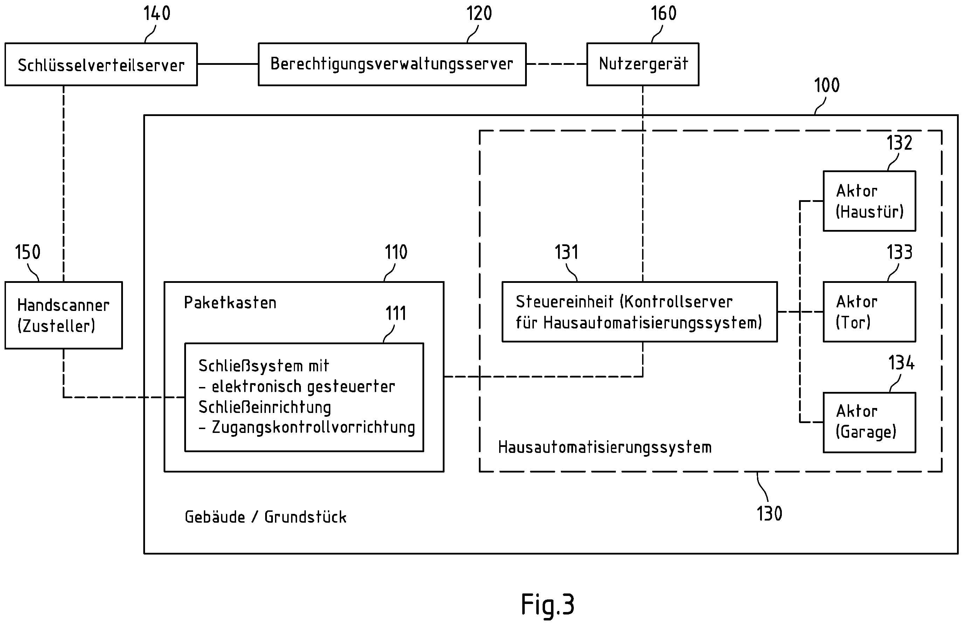

Figur 3 ist eine schematische Darstellung einer beispielhaften Ausführungsform eines Systems gemäß der Erfindung. Das System kann dabei ein System gemäß dem ersten Aspekt sein oder enthalten, und ebenso ein System gemäß dem nicht erfindungsgemäßen zweiten Aspekt sein oder enthalten.

Das System umfasst ortsfeste Komponenten 110, 130, die einem bestimmten Gebäude oder Grundstück 100 zugeordnet sind, ortsfeste Server 120, 140 eines Logistikunternehmens und tragbare elektronische Geräte 150, 160.

Zu den ortsfesten Komponenten, die einem bestimmten Gebäude oder Grundstück 100 zugeordnet sind, gehören ein Paketkasten 110 und Komponenten eines Hausautomatisierungssystems 130.

Der Paketkasten 110 umfasst mindestens ein Schließsystem 111 mit einer digitale Schließeinrichtung und einer Zugangskontrollvorrichtung. Die digitale Schließeinrichtung kann eine Tür des Paketkastens 110 sichern. Die Zugangskontrollvorrichtung kann zum Beispiel der ersten Vorrichtung 10 aus Figur 1 entsprechen. Die Zugangskontrollvorrichtung stellt eine erste Vorrichtung gemäß dem ersten Aspekt der Erfindung dar. Der Paketkasten 110 ist beispielhaft ein Paketkasten für ein Einfamilienhaus, der ein einzelnes Fach mit zugeordnetem Schließsystem umfasst. Alternativ könnte er aber auch ein Paketkasten für ein Mehrfamilienhaus sein und eine Mehrzahl von durch eine jeweilige Schließeinrichtung gesicherten Fächern umfassen. In letzterem Fall können alle Schließeinrichtungen zu dem gleichen Schließsystem gehören und von der gleichen Zugangskontrollvorrichtung gesteuert werden; oder es kann eine separate Zugangskontrollvorrichtung für jede Schließeinrichtung eingesetzt werden, so dass für jedes Fach ein eigenes Schließsystem vorhanden ist. Jede Schließeinrichtung ist durch eine eindeutige Kennung (LockID) identifiziert. Der Paketkasten 110 kann zusätzlich mindestens einen Briefkasten umfassen.

Das Hausautomatisierungssystem 130 umfasst einen Kontrollserver 131 als Steuereinheit und mehrere von dem Kontrollserver 131 ansteuerbare Aktoren 132-134.

Der Kontrollserver 131 umfasst zum Beispiel einen Prozessor, einen Programm- und Datenspeicher, einen Arbeitsspeicher und mindestens eine Kommunikationsschnittstelle. Der Programm- und Datenspeicher umfasst Programmanweisungen zum Empfangen von Anforderungen, bestimmte Aktionen zu veranlassen und Programmanweisungen zum Veranlassen der Aktionen, etwa durch Ansteuerung der entsprechenden Aktoren. Die Anforderungen können von beliebigen, bei dem Kontrollserver registrierten Geräten gestellt werden, sofern die Registrierung von einer hierzu berechtigten Person veranlasst wird. Der Programm- und Datenspeicher kann beispielsweise Registrierungsinformationen hierzu enthalten, sowie beispielsweise mindestens ein Passwort und mindestens einen Schlüssel für eine gesicherte Kommunikation. Der Kontrollserver 131 kann beispielsweise ein erstes proprietäres Kommunikationsprotokoll für eine Kommunikation mit den Aktoren 132-134 und ein zweites proprietäres Kommunikationsprotokoll für eine Kommunikation mit registrierten Geräten unterstützen.

Die Aktoren können zum Beispiel Schließeinrichtungen für diverse Türen und Tore umfassen, wie für eine Haustür 132, für ein Tor, das einen Zugang zum Gelände beschränkt 133, für eine Wohnungstür, für eine Kellertür, für ein Garagentor 134, usw. Die Aktoren können auch diverse andere Aktoren umfassen, wie elektronische Schalter für Beleuchtungen, Thermostate, usw.

Die Aktoren 132-134 können zum Beispiel dazu eingerichtet sein, über mindestens einen Wireless Access Point eines gebäudeeigenen WLANs oder über eine andere Funkverbindung kommunizieren zu können. Der Kontrollserver 131 kann ebenfalls dazu eingerichtet sein über einen Wireless Access Point oder über eine andere Funkverbindung zu kommunizieren. Ein Wireless Access Point oder ein damit verbundener Router ermöglicht über Kabel eine Verbindung zu einem fest installierten Kommunikationsnetz, einschließlich einer Verbindung zum Internet. Der Kontrollserver 131 kann alternativ beispielsweise auch über Kabel mit dem Wireless Access Point und/oder dem Internet verbunden sein. Der Kontrollserver 131 könnte ferner mit zumindest einigen der Aktoren 132-134 auch kabelgebunden verbunden sein, etwa mittels eines hauseigenen LANs.

Zu den ortsfesten Servern des Logistikunternehmens gehören beispielsweise ein Berechtigungsverwaltungsserver 120 und ein Schlüsselverteilungsserver 140. Der Berechtigungsverwaltungsserver 120 kann der Vorrichtung 20 aus Figur 2 entsprechen. Der Schlüsselverteilungsserver 140 ist eingerichtet, um - direkt oder indirekt - mit dem Berechtigungsverwaltungsserver 120 und mit verschiedenen Zustellergeräten zu kommunizieren. Es versteht sich, dass die Funktionen des Berechtigungsverwaltungsservers 120 auch in dem Schlüsselverteilungsserver 140 implementiert sein könnten. Andererseits könnte einem Berechtigungsverwaltungsserver 120 auch eine Mehrzahl von Schlüsselverteilungsservern 140 zugeordnet sein. Die Schlüsselverteilungsservern 140 könnten in dem Fall optional auch verschiedenen Dienstleistern zugeordnet sein.

Es versteht sich, dass außerdem diverse weitere Server des Logistikunternehmens in das erfindungsgemäße System eingebunden sein können.

Zu den tragbaren elektronischen Geräten des Systems können einerseits Zustellergeräte, wie von Paketzustellern genutzte Handscanner 150, und andererseits mindestens ein Nutzergerät 160 gehören.

Die Handscanner 150 umfassen zum Beispiel einen Scanner zum Scannen von SendungsIDs oder anderen Codes auf Paketen oder anderen Postsendungen, mindestens einen Speicher zum Speichern von aktuellen digitalen Schlüsseln für diverse Paketkästen und zum Speichern von Programmanweisungen zum Veranlassen des Handscanners 150, verschiedene Aktionen auszuführen.

Das Nutzergerät 160 kann ein beliebiges, für eine Datenkommunikation eingerichtetes Gerät sein, wie beispielsweise ein Smartphone, ein Tablet PC oder ein Desktop PC, das von einer für die Nutzung des Hausautomatisierungssystems 130 registrierten Person genutzt wird. Auf dem Nutzergerät 160 kann eine Anwendung gespeichert sein, die die Nutzung und ggf. Konfigurierung des Hausautomatisierungssystems 130 ermöglicht. Das Nutzergerät 160 kann dazu eingerichtet sein, über mindestens einen Wireless Access Point oder über eine andere Funkverbindung zu kommunizieren. Beispielsweise könnte eine Kommunikation mit dem Kontrollserver 131 über ein WLAN und eine Kommunikation mit dem Berechtigungsverwaltungsserver 120 über das WLAN oder ein Mobilfunknetz und weiter über das Internet vorgesehen sein.

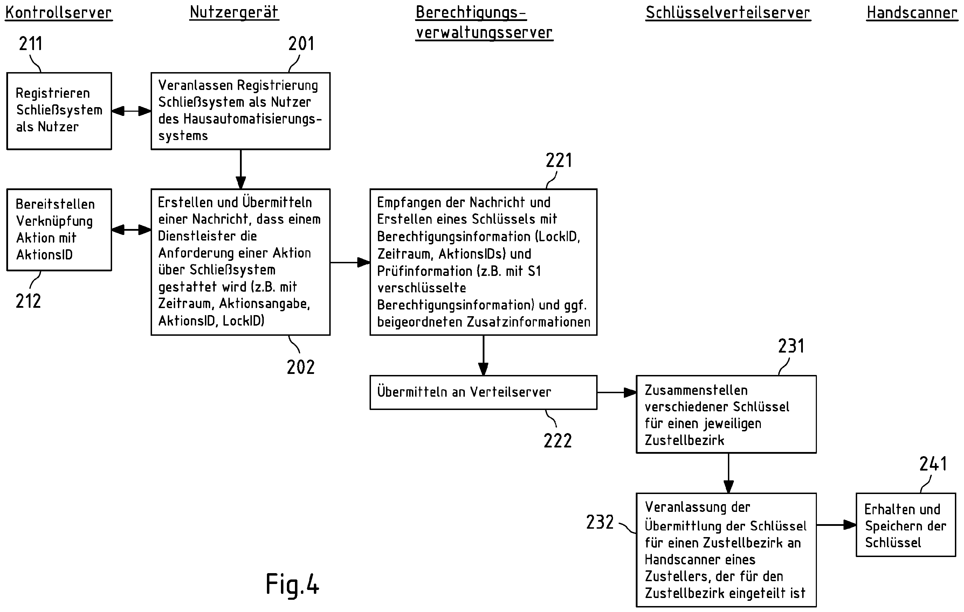

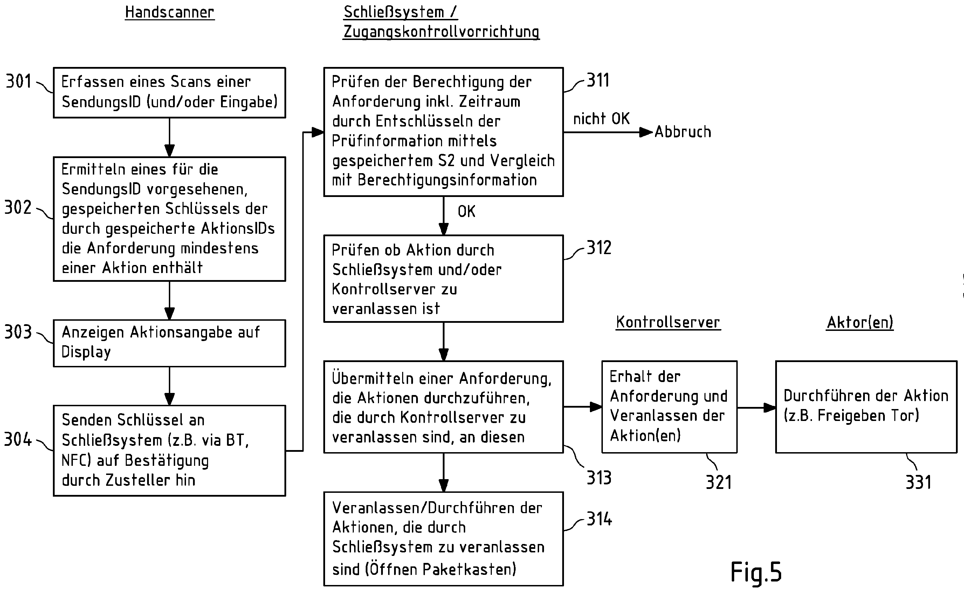

Das System gestattet es zum Beispiel einem Paketzusteller, für eine begrenzte Zeit die Ansteuerung von speziell hierfür freigegebenen Aktoren 132-134 zu veranlassen, die von dem Hausautomatisierungssystem 130 kontrolliert werden, ohne dass der Zusteller hierfür bei dem Hausautomatisierungssystem 130 registriert werden müsste. Figuren 4 und 5 illustrieren beispielhafte Operationen in dem System aus Figur 3.

Figur 4 ist ein Flussdiagramm, das Aktionen für eine Bereitstellung eines digitalen Schlüssels für einen Handscanner 150 eines Zustellers illustriert.

Der Paketkasten 110 ermöglicht es einem Zusteller, ein Paket zuzustellen oder abzuholen, auch wenn der Empfänger nicht zu Hause ist. Hierzu erhält und speichert ein Handscanner 150 des Zustellers einen digitalen Schlüssel speziell für den Paketkasten 110 des Empfängers. Der digitale Schlüssel ermöglicht es dem Zusteller, den Paketkasten 110 zu öffnen. Die Gültigkeit des digitalen Schlüssels kann dabei beispielsweise auf den Tag der Zustellung begrenzt sein. In einigen Fällen kann eine Zustellung oder Abholung jedoch trotz eines zur Verfügung stehenden, gültigen Schlüssels für den Paketkasten 110 nicht ohne Weiteres möglich sein. Beispielsweise kann das Paket zu groß sein für den Paketkasten 110, oder der Paketkasten 110 ist zwar im Freien, aber auf einem abgegrenzten Gelände hinter einem verschlossenen Tor angebracht.

Wenn der Empfänger in einem solchen Fall eine Benachrichtigung erhält, dass am nächsten Tag ein Paket zugestellt werden soll (oder wenn er die Abholung eines Pakets für einen bestimmten Tag in Auftrag gegeben hat), so kann er dem Zusteller für beschränkte Zeit zusätzlich eine eingeschränkte Nutzung eines Hausautomatisierungssystems 130 ermöglichen. Der Nutzer kann hierfür mittels eines beliebigen Nutzergeräts 160 sowie einer entsprechenden Konfigurationsanwendung für das Hausautomatisierungssystem 130 den Kontrollserver 131 so konfigurieren, dass das Schließsystem 111 des Paketkastens 110 als weiterer berechtigter Nutzer des Hausautomatisierungssystems 130 registriert ist. Eine solche Einstellung kann beispielsweise einmalig erfolgen. (Schritte 201, 211)

Zusätzlich kann der Nutzer mittels der Konfigurationsanwendung oder einer separaten Berechtigungsanwendung mindestens eine zu ermöglichende Aktion sowie einen zugehörigen Zeitraum wählen. Dass Nutzergerät 160 übermittelt an den Berechtigungsverwaltungsserver 120 eine Nachricht, die eine Identifizierung der Schließeinrichtungen des Schließsystems 111, z.B. in Form der LockID oder einer MAC-Adresse, eine Angabe der Aktion und eine AktionsID, der die Aktion im Kontrollserver 131 identifiziert, sowie eine Angabe des gewählten Zeitraums enthält. Die Identifizierung der Schließeinrichtung kann zum Beispiel in dem Nutzergerät 160 gespeichert sein und für die Nachricht abgerufen werden. Der Berechtigungsverwaltungsserver 120 könnte aber auch Identifizierungen von Schließeinrichtungen mit einer Zuordnung zu jeweilige Nutzerdaten speichern und die erforderlichen Identifizierung automatisch anhand von übermittelten Nutzerdaten auswählen. Solche Nutzerdaten - beispielsweise einschließlich eines Passworts - könnten ohnehin vor oder zusammen mit der Nachricht übermittelt werden, um die erforderliche Sicherheit vor Manipulationen zu gewähren. Sind einem Nutzer mehrere Schließeinrichtungen zugeordnet, so kann der Berechtigungsverwaltungsserver 120 dem Nutzer dann über das Nutzergerät 160 eine Liste zur Auswahl zur Verfügung stellen. Die Zuordnung von Aktion zu AktionsID kann beispielsweise mittels des Nutzergeräts 160 von dem Kontrollserver 131 abgerufen werden. Optional könnte auch vorgesehen sein, dass in der Nachricht zusätzlich eine bestimmte, angekündigte Sendung identifiziert wird, beispielsweise entsprechend einer in der Benachrichtigung enthaltenen SendungsID. Der Berechtigungsverwaltungsserver 120 kann insbesondere ausschließlich für einen bestimmten Dienstleister, etwa das Logistikunternehmen, eingerichtet sein. Ist der Berechtigungsverwaltungsserver 120 für mehrere Dienstleister vorgesehen, so kann zusätzlich eine Identifizierung des Dienstleisters übermittelt werden. Die Übermittlung kann dabei über das Internet erfolgen, auf das gegebenenfalls über WLAN oder über ein Mobilfunknetz zugegriffen wird. (Schritte 202, 212)

Nutzt das Nutzergerät 160 separate Anwendungen für eine Interaktion mit dem Kontrollserver 131 einerseits und dem Berechtigungsverwaltungsserver 120 andererseits, so könnten diese Anwendungen gegebenenfalls auch miteinander interagieren, um den Nutzer bei der Zusammenstellung der zu übertragenden Daten zu unterstützen. Der Nutzer könnte sich für die Interaktion mit dem Berechtigungsverwaltungsserver 120 aber zum Beispiel auch mit dem Nutzergerät 160 über einen Browser bei dem Berechtigungsverwaltungsserver 120 einloggen und die Nachricht mittels einer nur im Browser laufenden Anwendung übermitteln.

Alternativ könnte die Nachricht auch von dem Kontrollserver 131 zusammengestellt und an den Berechtigungsverwaltungsserver 120 übermittelt werden.

Der Berechtigungsverwaltungsserver 120 kann von einem Prozessor des Berechtigungsverwaltungsservers 120 (z.B. entsprechend Prozessor 21) bei Ausführung von Programmanweisungen aus einem Speicher des Berechtigungsverwaltungsservers 120 (z.B. entsprechend Speicher 22) veranlasst werden, die nachfolgenden Schritte 221 und 222 durchzuführen.

Der Berechtigungsverwaltungsserver 120 empfängt die Nachricht von dem Nutzergerät 160 und generiert daraufhin einen digitalen Schlüssel. (Schritt 221) Der digitale Schlüssel enthält eine Berechtigungsinformation und eine Prüfinformation und wird ggf. ergänzt durch begleitende Zusatzinformationen.

Die Berechtigungsinformation kann zum Beispiel die LockID, die AktionsID und verschiedene Parameter, die den angegebenen Zeitraum definieren, enthalten. Zusätzlich kann der Berechtigungsverwaltungsserver 120 Angaben zu einer der LockID generell zugeordneten Aktion - insbesondere das Öffnen eines Paketkastenfachs - hinzufügen. Solche Angaben können in einem Speicher (z.B. entsprechend Speicher 22) des Berechtigungsverwaltungsservers 120 gespeichert und anhand der erhaltenen LockID ausgelesen werden. Es versteht sich, dass der Berechtigungsinformation noch beliebige weitere Informationen beigefügt werden können, wie eine Anzahl von erlaubten Zugriffen auf Aktionen mittels des generierten digitalen Schlüssels.

Die Berechtigungsinformation kann beispielsweise ein oder mehrere der folgenden Berechtigungsparameter enthalten:
- LockID: ID der Schließeinrichtung
- NotBeforeDate: Datum "gültig von" mit Jahr/Monat/Tag
- NotAfterDate: Datum "gültig bis" mit Jahr/Monat/Tag
- StartTimeOfDay: Uhrzeit ab wann die Zugangsberechtigung gültig ist (Standard z.B. 00:00:00)
- EndTimeOfDay: Uhrzeit bis wann die Zugangsberechtigung gültig ist (Standard z.B. 23:59:59)
- MaxUses: Anzahl der Verwendungen; Standard 0 bedeutet "unbegrenzt"
- Permissions: Erlaubnis für sicherheitskritische Operationen am Schließsystem
- External Permission: AktionsID für Hausautomatierungssystem

Dabei definieren die zwei Parameter *"NotBeforeDate"* und *"NotAfterDate"* den Gültigkeitszeitraum der Zugangsberechtigung, z.B. mit der Genauigkeit eines Tages. *"NotBeforeDate"* legt den Tag der Erstverwendung fest und *"NotAfterDate"* den letzten Tag im Gültigkeitszeitraum. *"StartTimeOfDay"* spezifiziert weiter die Uhrzeit, ab wann der Gültigkeitszeitraum beginnt, und *"EndTimeOfDay"* spezifiziert, wann dieser endet. Die Genauigkeit ist beispielsweise eine Sekunde. *"MaxUses"* definiert, wie oft der digitale Schlüssel verwendet werden kann, um ein Schloss einer Schließeinrichtung zu öffnen. Der Wert "0" legt dabei beispielsweise fest, dass der digitale Schlüssel unbegrenzt im definierten Zeitraum verwendet werden darf. *"Permissions"* kodiert, beispielsweise durch das Setzen von einzelnen Bits in einem Byte, welche sicherheitskritischen Operationen ein über den digitalen Schlüssel verfügendes Gerät ausführen darf (ein auf'1' gesetztes Bit zeigt dann jeweils das Vorliegen der Berechtigung an), z.B. ob jeweils ein Öffnen eines Paketfachs oder ob ein Öffnen eines Paketfachs und eines Brieffachs erlaubt wird. *"External Permission"* definiert eine erste AktionsID für eine Aktion, wie er von dem Kontrollserver 131 des Hausautomatisierungssystems 130 für die Anforderung einer Aktion erwartet wird. Sind alle Bits auf'0' gesetzt, so kann dies beispielsweise anzeigen, dass keine Aktion freigegeben wurde. Soll die Möglichkeit gegeben sein, mehrere über ein Hausautomatisierungssystem 130 gesteuerte Aktionen anzufordern, so können hierzu mehrere Parameter vorgesehen werden, beispielsweise *"External Permission 1"* und *"External Permission 2",* usw. Es kann dabei eine feste Anzahl von solchen Parametern vorgesehen sein, die ggf. auf Null gesetzt werden können, oder es kann vorgesehen werden, dass solche Parameter je nach Bedarf hinzugefügt werden können.

Die Prüfinformation erlaubt es, die Berechtigungsinformation und damit die Berechtigung an sich zu prüfen. Sie kann beispielsweise eine mit einem am Berechtigungsverwaltungsserver 120 gespeicherten Schlüssel S1 verschlüsselte Berechtigungsinformation oder eine mit einem am Berechtigungsverwaltungsserver 120 gespeicherten Schlüssel S1 erzeugte Signatur über die Berechtigungsinformation sein. Der Schlüssel S1 kann zum Beispiel ein Schlüssel eines symmetrischen Schlüsselpaars oder ein Schlüssel eines asymmetrischen Schlüsselpaars sein. In einem Speicher (z.B. entsprechend Speicher 22) des Berechtigungsverwaltungsservers 120 kann für eine Vielzahl von Schließsystemen jeweils ein eigener Schlüssel S1 mit Zuordnung zu der LockID des jeweiligen Schließsystems gespeichert sein. Der jeweils benötigte Schlüssel S1 kann dann anhand der erhaltenen LockID abgerufen und für die Erzeugung der Prüfinformation verwendet werden. Im Falle eines symmetrischen Schlüsselpaars kann der Schlüssel S1 ausschließlich in dem Berechtigungsverwaltungsserver 120 und - als identischer Schlüssel S2 - in dem durch die LockID identifizierten Schließsystem 111 gespeichert sein. Im Falle eines Verschlüsselungsverfahrens mit asymmetrischem Schlüsselpaar kann der öffentliche Schlüssel S1 zum Verschlüsseln ausschließlich in dem Berechtigungsverwaltungsserver 120 gespeichert sein, während der entsprechende private Schlüssel S2 zum Entschlüsseln ausschließlich in dem durch die LockID identifizierten Schließsystem 111 gespeichert sein kann. Im Falle eines Signierungsverfahrens mit asymmetrischem Schlüsselpaar kann der private Schlüssel S1 zum Signieren ausschließlich in dem Berechtigungsverwaltungsserver 120 gespeichert sein, während der entsprechende öffentliche Schlüssel S2 zum Prüfen der Signatur ausschließlich in dem durch die LockID identifizierten Schließsystem 111 gespeichert sein kann.

Die Angabe der Aktionen, die in dem digitalen Schlüssel über die AktionsIDs identifiziert werde, kann dem digitalen Schlüssel beispielsweise als Zusatzinformation in Textform beigefügt werden. Es versteht sich, dass noch beliebige weitere Informationen als Zusatzinformationen beigefügt werden können, wie eine SendungsID für ein erwartetes Paket, eine SendungsID für ein abzuholendes Paket, eine der LockID des Schließsystems 111 in einem Speicher (z.B. entsprechend Speicher 22) des Berechtigungsverwaltungsservers 120 zugeordnete Straßenadresse und/oder die erhaltene oder aus einem Speicher (z.B. entsprechend Speicher 22) des Berechtigungsverwaltungsservers 120 ausgelesene MAC-Adresse des Schließsystems 111.

Der Berechtigungsverwaltungsserver 120 übermittelt den erstellten digitalen Schlüssel mit den beigeordneten Zusatzinformationen an den Schlüsselverteilserver 140. (Schritt 222)

Der Berechtigungsverwaltungsserver 120 kann für eine Vielzahl von Nutzern entsprechende digitale Schlüssel erzeugen, wenn für den jeweiligen Nutzer ein Paket zuzustellen oder abzuholen ist. Sofern der Empfänger eines auszuliefernden Pakets oder ein Absender eines abzuholenden Pakets bis zu einem festgelegten Zeitpunkt keine zusätzlichen Aktionen aus einem Hausautomatisierungssystem 130 freigegeben hat, umfasst die Berechtigungsinformation dabei zum Beispiel lediglich einen angepassten Parameter für die Freigabe der Öffnung eines Paketkastens 110. Der Zeitraum der Gültigkeit des digitalen Schlüssels kann in dem Fall zum Beispiel auf einen vorgegebenen längeren Zeitraum an dem für die Zustellung geplanten Tag (etwa für den ganzen Tag, also zwischen 0:00 Uhr und 23:59 Uhr) festgelegt werden.

Der Schlüsselverteilserver 140 erhält von dem Berechtigungsverwaltungsserver 120 eine Vielzahl von digitalen Schlüsseln, beispielsweise über eine gesicherte Internetverbindung. Der Schlüsselverteilserver 140 legt für einen jeweiligen Tag Zustellbezirke fest, in denen Zusteller Pakete ausliefern sollen. Er stellt dann für jeden Zustellbezirk die digitalen Schlüssel zusammen, die eine LockID enthalten, die ein Schließsystem in dem Zustellbezirk identifiziert. Hierzu kann der Schlüsselverteilserver 140 eine Zuordnung der LockIDs der Schließsysteme von installierten Paketkästen zu Straßenadressen in einem Speicher speichern und für die Zusammenstellung der digitalen Schlüssel auswerten, sofern die Straßenadressen nicht bereits von dem Berechtigungsverwaltungsserver 120 zusammen mit den digitalen Schlüsseln bereitgestellt wurden. (Schritt 231)

Der Schlüsselverteilserver 140 veranlasst dann eine Übertragung der für einen jeweiligen Zustellbezirk zusammengestellten digitalen Schlüssel zusammen mit den ggf. vom Berechtigungsverwaltungsserver 120 beigeordneten Zusatzinformationen für die digitalen Schlüssel auf den Handscanner 150 eines Zustellers, der für den Zustellbezirk eingeteilt ist. (Schritt 232) Die Übertragung kann auf vielfältige Weise erfolgen. Beispielsweise kann die Übertragung in einem Paketcenter, an dem der Zusteller die auszuliefernden Pakete einlädt, erfolgen. Die Übertragung kann dann beispielsweise über ein lokales WLAN erfolgen. Alternativ könnte eine Übertragung über einen ortsfesten Computer mittels Kabelverbindung oder Bluetooth, oder aber über eine Dockingstation für die Handscanner erfolgen. Die Übertragung könnte weiter alternativ auch über ein Mobilfunknetz erfolgen, wenn die Handscanner für eine Kommunikation über das Mobilfunknetz eingerichtet sind. Die Übertragung kann jeweils zusätzlich gesichert sein, beispielsweise mittels einer Verschlüsselung, die nur von dem jeweils vorgesehenen Handscanner 150 entschlüsselt werden kann.

Der Handscanner 150 erhält die digitalen Schlüssel für einen Zustellbezirk und speichert sie in einem internen Speicher. (Schritt 241) Da jeder Schlüssel beispielsweise maximal einen Tag lang Gültigkeit hat, können die gespeicherten digitalen Schlüssel automatisch vor dem Einlesen neuer digitaler Schlüssel oder jeweils zu einer bestimmten Uhrzeit gelöscht werden.

Es versteht sich, dass ein digitaler Schlüssel in bestimmten Konstellationen auch an mehr als einen Handscanner 150 übertragen werden kann, beispielsweise um eine flexiblere Handhabung in angrenzenden Zustellbezirken zu ermöglichen.

Figur 5 ist ein Flussdiagramm, das die Veranlassung von Aktionen durch ein Hausautomatisierungssystem 130 mittels eines Handscanners 150 mit geeignetem digitalem Schlüssel illustriert.

Ein Zusteller liefert in einem zugeteilten Zustellbezirk Pakete aus und nutzt hierzu den Handscanner 150. In dem Handscanner 150 sind die für den aktuellen Tag erzeugten digitalen Schlüssel für den Zustellbezirk gespeichert.

Ein Paket soll an einer bestimmten Adresse ausgeliefert werden. Für den Empfänger ist ein Paketkasten an der Adresse vorhanden, aber er befindet sich hinter einem verschlossenen Tor. Der Zusteller scannt eine SendungsID oder einen umfangreicheren Code auf dem Paket mit dem Handscanner 150. Die SendungsID wird von dem Handscanner 150 erfasst und einer auf dem Handscanner 150 laufenden Anwendung zur Verfügung gestellt. (Schritt 301) Die Anwendung ermittelt anhand der SendungsID einen zugeordneten, gespeicherten digitalen Schlüssel und dem digitalen Schlüssel zugeordnete gespeicherte Zusatzinformationen. (Schritt 302) Die Zusatzinformationen werden zumindest zum Teil auf einem Display des Handscanners 150 angezeigt. Die angezeigten Zusatzinformationen enthalten beispielsweise die Angabe, dass eine Berechtigung für das Öffnen eines Tors sowie eines Paketkastens vorliegt. (Schritt 302) Der digitale Schlüssel enthält in der Berechtigungsinformation beispielsweise ein entsprechend gesetztes Bit in dem *"Permissions"* Parameter für das Öffnen des Paketkastens und einen *"External Permission"* Parameter mit der hausautomatisierungssystemspezifischen AktionsID für das Öffnen des Tors.

Der Zusteller kann das Öffnen des Tors und des Paketkastens 110 nun durch Eingabe einer Bestätigung an dem Handscanner 150 anfordern.

Der Handscanner 150 baut daraufhin eine Verbindung mit der Zugangskontrollvorrichtung des Schließsystems 111 des Paketkastens 110 auf, beispielsweise eine Bluetooth-Verbindung. Hierzu kann der Handscanner 150 eine in dem ausgelesenen digitalen Schlüssel oder in der Zusatzinformation enthaltene MAC-Adresse des Schließsystems 111 nutzen, um den Verbindungsaufbau zu ermöglichen oder zu beschleunigen. In einigen Ausführungsbeispielen könnte die LockID auch identisch sein mit der MAC-Adresse, so dass eine getrennte Aufnahme einer MAC-Adresse in dem digitalen Schlüssel oder in der Zusatzinformation nicht erforderlich ist. Ein Verbindungsaufbau ist aber auch ohne Kenntnis der MAC-Adresse mittels eines Bluetooth-Pairings möglich. Wenn die Verbindung erstellt ist, überträgt der Handscanner 150 den ermittelten Schlüssel an die Zugangskontrollvorrichtung des Schließsystems 111. Die Zusatzinformationen brauchen hierbei nicht übertragen zu werden, da sie ggf. nur für die Operation des Handscanners 150 und für eine Information an den Zusteller benötigt werden. (Schritt 304) Alternativ zu einer Bluetooth-Verbindung kann auch eine andere Art der Verbindung genutzt werden, wie beispielsweise eine NFC- oder eine RFID-Verbindung.

Das Schließsystem 111 kann von einem Prozessor der Zugangskontrollvorrichtung (z.B. entsprechend Prozessor 11) bei der Ausführung von Programmanweisungen aus einem Speicher der Zugangskontrollvorrichtung (z.B. entsprechend Speicher 12) veranlasst werden, die nachfolgenden Schritte 311 bis 314 durchzuführen.

Das Schließsystem 111 unterstützt den Verbindungsaufbau und empfängt den digitalen Schlüssel über eine Bluetooth-Schnittstelle (z.B. entsprechend der Kommunikationsschnittstelle 14).

Der Erhalt eines digitalen Schlüssels impliziert generell eine Anforderung. Das Schließsystem 111 prüft zunächst die Berechtigung der Anforderung. Die Prüfung kann verschiedene Punkte umfassen, die in beliebiger Reihenfolge abgearbeitet werden können. (Schritt 311)

So kann das Schließsystem 111 prüfen, ob eine in der Berechtigungsinformation enthaltene LockID mit der LockID der Schließeinrichtung 111 übereinstimmt. Die LockID der Schließeinrichtung 111 kann in einem Speicher der Zugangskontrollvorrichtung (z.B. entsprechend Speicher 12) gespeichert sein. Liegt keine Übereinstimmung vor, so wird der Vorgang abgebrochen.

Des Weiteren kann das Schließsystem 111 prüfen, ob die von einer internen Uhr angegebene Zeit in einen durch die Berechtigungsinformation definierten Zeitraum fällt. Ist dies nicht der Fall, so wird der Vorgang abgebrochen.

Zusätzlich könnte das Schließsystem 111 anhand eines internen Zählers prüfen, ob der gleiche digitale Schlüssel bereits öfter als gemäß einer Angabe in einem *"MaxUses"* Parameter erlaubt übermittelt wurde. Ist dies der Fall, so wird der Vorgang abgebrochen.

Des Weiteren kann das Schließsystem 111 die Authentizität und Integrität der Berechtigungsinformation prüfen. So kann das Schließsystem 111 eine mit Schlüssel S1 verschlüsselte Prüfinformation in dem digitalen Schlüssel mit einem in einem Speicher der Zugangskontrollvorrichtung (z.B. entsprechend Speicher 12) gespeicherten Schlüssel S2 entschlüsseln. Die entschlüsselte Prüfinformation kann dann mit der Berechtigungsinformation verglichen werden. Stimmen die Informationen nicht überein, so wird der Vorgang abgebrochen. Alternativ kann das Schließsystem 111 eine mit Schlüssel S1 als Prüfinformation erzeugte Signatur in dem digitalen Schlüssel mit einem in einem Speicher der Zugangskontrollvorrichtung (z.B. entsprechend Speicher 12) gespeicherten Schlüssel S2 prüfen. Kann die Signatur nicht validiert werden, so wird der Vorgang abgebrochen. Es versteht sich, dass sowohl bei einer Verschlüsselung als auch bei einer Signatur zusätzlich eine Hash-Funktion angewandt und bei der Prüfung berücksichtigt werden kann.

War das Ergebnis sämtlicher Prüfungen dagegen positiv, so prüft das Schließsystem 111, ob in der Berechtigungsinformation identifizierte Aktionen durch das Schließsystem 111 und/oder durch den Kontrollserver 131 des Hausautomatisierungssystems 130 zu veranlassen sind. (Schritt 312)

Aktionen, die durch das Schließsystem 111 zu veranlassen sind, ergeben sich beispielsweise durch gesetzte Bits in einem *"Permissions"* Byte.

Aktionen, die durch den Kontrollserver 131 zu veranlassen sind, ergeben sich beispielsweise durch das Vorhandensein mindestens eines *"External Permission"* Parameters (bzw. dadurch, dass mindestens ein solcher vorhandener Parameter nicht nur Nullen enthält).

Ist mindestens eine Aktion definiert, die durch den Kontrollserver 131 zu veranlassen ist, so übermittelt das Schließsystem 111 die AktionsID aus jedem *"External Permission"* Parameter als Anforderung einer entsprechenden Aktion über eine WLAN Schnittstelle (z.B. entsprechend der Kommunikationsschnittstelle 15) an den Kontrollserver 131. (Schritt 313) Die für den Zugang zum WLAN erforderlichen Zugangsdaten können in einem Speicher der Zugangskontrollvorrichtung (z.B. entsprechend Speicher 12) gespeichert sein. Die Zugangsdaten können der Zugangskontrollvorrichtung von dem Nutzer in geeigneter Weise übermittelt worden sein, beispielsweise ebenfalls über die Bluetooth-Schnittstelle (z.B. entsprechend der Kommunikationsschnittstelle 14). Das Eingeben von Zugangsdaten kann eine Aktion sein, die beispielsweise mittels eines digitalen Schlüssels in der Nutzereinrichtung 160 erlaubt werden kann, in dem unter anderem ein dafür vorgesehenes Bit in dem *"Permissions"* Parameter gesetzt wird. Ein entsprechender digitaler Schlüssel für Nutzereinrichtungen 160 kann ebenfalls von dem Berechtigungsverwaltungsserver 120 generiert und übermittelt werden.

Da das Schließsystem 111 bei dem Kontrollserver 131 als berechtigter Nutzer registriert ist, wird die erhaltene Anforderung als zulässig angesehen, und der Kontrollserver 131 veranlasst die identifizierte Aktion. (Schritt 321) Dies kann beispielsweise darin bestehen, dass über WLAN oder drahtgebunden ein geeignetes Steuersignal an den für die identifizierte Aktion zuständigen Aktor 133 gesendet wird.

Der Aktor 133 kann beispielsweise ein elektronisch gesteuertes Schloss sein, im vorliegenden Beispiel ein Schloss des Tors. Das Steuersignal veranlasst eine Freigabe des Schlosses, so dass der Zusteller das Tor für kurze Zeit öffnen und das abgegrenzte Gelände betreten kann. (Schritt 331) Alternativ könnte insbesondere bei einem größeren Zufahrtstor auch ein Motor angesteuert werden, der das Tor automatisch öffnet.

Ist mindestens eine Aktion definiert, die durch das Schließsystem 111 auszuführen oder zu veranlassen ist, so veranlasst die Zugangskontrollvorrichtung die entsprechende Aktion, indem ein entsprechendes Steuersignal über eine hierfür vorgesehene Ansteuerungsschnittelle (z.B. entsprechend der Ansteuerungsschnittelle 16) an einen für die Aktion vorgesehenen Aktor übermittelt wird. So kann beispielsweise insbesondere der Paketkasten 110 durch die Schließeinrichtung 111 geöffnet werden. (Schritt 314) Der Paketzusteller kann somit das Paket in das Paketfach legen und danach die Tür des Paketkastens 110 wieder zudrücken.

Das Schließsystem 111 des Paketkastens 110 kann so eingerichtet sein, dass vor der Freigabe der Tür des Paketkastens 110 bei Übermittlung eines digitalen Schlüssels ein Knopf gedrückt werden muss oder dass ein Näherungssensor ein nahes Objekt detektiert haben muss. Der Zusteller muss also nach Betreten des abgezäunten Geländes gegebenenfalls den digitalen Schlüssel erneut übermitteln, damit sich die Tür des Paketkastens öffnet. Der Zusteller kann gegebenenfalls den Schlüssel ein drittes Mal übermitteln, um das Gelände durch das Tor wieder verlassen zu können, wenn das Tor auch von Innen nur über den Kontrollserver 131 oder einen physikalischen Schlüssel freigegeben wird. Die Möglichkeit der Übermittlung des digitalen Schlüssels kann daher dem Zusteller solange auf dem Display angezeigt werden, bis die Anzeige aktiv vom Zusteller geschlossen wird, nachdem er das Gelände wieder verlassen hat. Zusätzlich oder alternativ kann eine Wiederholung der letzten Anzeige aufgerufen werden, um es dem Zusteller zu ermöglichen, den digitalen Schlüssel erneut zu übermitteln.

Die Erfindung ermöglicht somit eine Erweiterung der Nutzbarkeit von Zustellergeräten, die mit einer Zugangskontrolleinrichtung eines Paketkastens kommunizieren können, um von dieser das Veranlassen von Aktionen anzufordern. Die Erfindung ermöglicht außerdem eine erweiterte Nutzbarkeit von über ein Hausautomatisierungssystem gesteuerten Aktionen.

Es versteht sich, dass das beschriebene System und die beschriebenen Verfahren die Erfindung lediglich beispielhaft erläutern.

Einige der möglichen vielfältigen Variationen werden beispielhaft im Folgenden aufgeführt:
In einer anderen Situation kann ein Paketkasten zwar frei zugänglich sein, der Empfänger kann aber erwarten, dass das Paket zu groß ist, um im Paketkasten abgelegt zu werden. Er kann dann (statt einer Berechtigung zum Öffnen eines Zauntors o.ä.) eine Berechtigung für die Öffnung eines Garagentors veranlassen, damit das Paket in der Garage hinterlegt werden kann. Für ein Garagentor kann ein Hausautomatisierungssystem vorsehen, dass eine aufeinanderfolgende Übermittlung einer entsprechenden AktionsID zunächst eine Öffnung des Garagentors veranlasst und dann eine Schließung des Garagentors. Der Zusteller muss in diesem Fall also nach Ablegen des Pakets in der Garage den Schlüssel ein zweites Mal übermitteln, um das Garagentor wieder zu schließen.

Die Erfindung kann nicht nur für ein Hausautomatisierungssystem sondern erfindungsgemäß auch für eine zentrale Schließanlage eines Gebäudes (z.B. ein Gebäudeschließsystem) eingesetzt werden. Ein Gebäudeschließsystem kann beispielsweise für ein Bürogebäude oder Mehrfamilienhaus eingerichtet sein, bei dem Wohnungs- oder Bürotüren mittels individuell konfigurierten • Chips zugänglich sind, und wobei alle Chips einen Zugang zu einem Hauseingang und ggf. einer Garage und ggf. einem Keller ermöglichen.

In einer anderen Situation kann der Paketkasten bei einem Mehrfamilienhaus hinter der Haustür im Treppenhaus angebracht sein. Statt eines Hausautomatisierungssystems könnte dann erfindungsgemäß eine zentrale Schließanlage eines Gebäudes (z.B. ein zentrales Gebäudeschließsystem) vorhanden sein, das zum Beispiel die Haustür, mindestens eine Kellertür und ein Garagentor elektronisch über einen Kontrollserver gesteuert öffnen kann. Ein Schließsystem des Paketkastens kann dann bei dem Gebäudeschließsystem als zusätzlicher Nutzer registriert sein. Alle Hausbewohner könnten die Berechtigung haben, bei Bedarf die Öffnung der Haustür über einen Handscanner eines Zustellers zu ermöglichen, ähnlich wie oben für das Hausautomatisierungssystem beschrieben. Alternativ könnte generell von dem Hausbesitzer oder einer Eigentümergemeinschaft bei dem Berechtigungsverwaltungsserver vorgegeben sein, dass bei jeder Erstellung eines normalen digitalen Schlüssels für den Paketkasten zusätzlich eine Berechtigung für die Freigabe der Haustür durch das zentrale Schließsystem in den digitalen Schlüssel eingefügt wird.

Wenn für sicherheitsrelevante Operationen der Zugangskontrollvorrichtung eines Schließsystems eines Paketkastens beispielsweise maximal 4 Bits eines *"Permissions"-Bytes* erforderlich sind, so könnten die restlichen Bits auch für die Identifizierung von Aktionen genutzt werden, die von einem Kontrollserver eines Hausautomatisierungssystems zu veranlassen sind. In dem Fall könnte der Kontrollserver einem bestimmten der Bits 5-8 eines Bytes eine Aktion zuordnen, die dann bei Erhalt eines Bytes mit entsprechend gesetztem Bit veranlasst wird.

Die übermittelten Daten und die Übermittlung der Daten zwischen den einzelnen Komponenten des Systems können auf beliebige andere und/oder zusätzliche Arten vor einem Zugriff und/oder vor unberechtigten Änderungen geschützt werden.

Der beschriebene Ansatz kann nicht nur basierend auf Zugangskontrollvorrichtungen für Paketkästen sondern auch für Zugangskontrollvorrichtungen für Paketbutler genutzt werden. Ein Paketbutler ist dabei ein zusammenfaltbarer Behälter, der jeweils bei Bedarf an einer Haus- oder Wohnungstür angebracht werden kann. Ähnlich wie bei einem Paketkasten kann ein Zusteller eine Sendung in den Paketbutler einlegen und diebstahlsicher mittels eines Schließsystems verschließen.

Der beschriebene Ansatz kann nicht nur genutzt werden, um Zustellern zusätzliche Aktionen zu ermöglichen, sondern auch diversen anderen Personen. So könnte es beispielsweise vorgesehen sein, dass ein Nachbar während eines Urlaubs eines Paketkastennutzers für den Nutzer in dem Paketkasten hinterlegte Pakete und in einen Briefkasten eingeworfene Briefe entnimmt und im Haus des Nutzers ablegt. Der Nachbar könnte optional einen eigenen Paketkasten haben oder ohnehin berechtigt sein, den Paketkasten mit zu nutzen und daher bereits eine entsprechende Anwendung für das Empfangen und Übermitteln eines digitalen Schlüssels zum Öffnen eines Paketkastens auf einem Mobiltelefon installiert haben oder über einen entsprechenden Tag verfügen. Für den Nachbarn könnte dann speziell für die Dauer der Urlaubszeit ein zusätzlicher oder alternativer digitaler Schlüssel generiert werden, der das Öffnen des Paketkastens und des Briefkastens des Nutzers durch ein Schließsystem eines kombinierten Paket- und Briefkastens sowie das Öffnen der Haustür des Hauses des Nutzers (nach Berechtigungsprüfung durch das Schließsystem des kombinierten Paket- und Briefkastens) durch ein Hausautomatisierungssystem ermöglicht. Dieser digitale Schlüssel kann auf Anforderung des Nutzers hin von einem Server erstellt und dann zu einem tragbaren elektronischen Gerät des Nachbarn zur vorübergehenden Nutzung übertragen werden.

## Patentansprüche

1. Verfahren in einem System zur Zustellung und/oder Abholung von Sendungen, das Verfahren umfassend:
- Erhalten einer Nachricht durch eine erste Vorrichtung (10) von einer zweiten Vorrichtung (150), mit der die Veranlassung einer Aktion angefordert wird,
- Prüfen, durch die erste Vorrichtung (10), der Berechtigung der Anforderung anhand der erhaltenen Nachricht,
- Prüfen, durch die erste Vorrichtung (10), ob die Aktion eine Aktion ist, die von der ersten Vorrichtung (10) durchzuführen oder zu veranlassen ist oder eine Aktion, die das Freigeben eines Zugangs zu einem gesicherten Bereich umfasst und die von einer von der ersten Vorrichtung (10) separaten Steuereinheit (131) zu veranlassen ist, wobei die erste Vorrichtung (10) eine Zugangskontrollvorrichtung eines Paketkastens oder Paketbutlers oder eine Zugangskontrollvorrichtung für einen Paketkasten (10) oder Paketbutler ist, und wobei die Steuereinheit (131) eine Steuereinheit eines Heimautomatisierungssystems (130) oder einer zentralen Schließanlage eines Gebäudes ist, und
- wenn festgestellt wird, dass eine Berechtigung vorliegt und dass die Aktion von der Steuereinheit (131) zu veranlassen ist, Übermitteln, durch die erste Vorrichtung (10), einer Anforderung an die Steuereinheit (131), die Aktion zu veranlassen und
- Veranlassen der Aktion auf Erhalt der Anforderung der ersten Vorrichtung (10) hin durch die Steuereinheit (131).

2. Verfahren nach Anspruch 1, wobei das Prüfen der Berechtigung der Anforderung folgendes umfasst:
- Entschlüsseln von in der Nachricht enthaltenen verschlüsselten Daten und Vergleichen der entschlüsselten Daten mit nicht verschlüsselten Daten, wobei die nicht verschlüsselten Daten ebenfalls in der erhaltenen Nachricht enthalten, aus enthaltenen Daten hergeleitet und/oder in der ersten Vorrichtung (10) gespeichert sind, und/oder
- Überprüfen einer in der Nachricht enthaltenen digitalen Signatur für in der Nachricht enthaltene Daten anhand der in der Nachricht enthaltenen Daten.

3. Verfahren nach einem der Ansprüche 1 und 2, wobei eine Aktion, die von der Steuereinheit (131) zu veranlassen ist, eine der folgenden Aktionen umfasst:
- Freigeben eines Zugangs zu einem gesicherten Bereich, wobei der Bereich kein Paketkastenaufnahmebereich, kein Briefkastenaufnahmebereich und kein Paketbutleraufnahmebereich ist;
- Öffnen oder Freigeben einer Tür oder eines Tors; und
- Öffnen oder Freigeben einer Tür, wobei die Tür keine Paketkastentür und keine Briefkastentür ist.

4. Verfahren nach einem der Ansprüche 1 bis 3, wobei die erste Vorrichtung (10)
- ortsfest angebracht ist und/oder
- ein Schließsystem des Paketkastens oder des Paketbutlers ist und/oder
- in oder an dem Paketkasten oder dem Paketbutler angebracht ist und/oder
- einen Schließmechanismus, einen Prozessor (11), einen Speicher (12), und zwei Kommunikationsschnittstellen (14,15) umfasst und/oder
- ein erstes Kommunikationsprotokoll für das Empfangen der Nachricht von der zweiten Vorrichtung (150) und ein zweites, anderes Kommunikationsprotokoll für das Übermitteln der Anforderung an die Steuereinheit (131) nutzt und/oder
- ein funkbasiertes Kommunikationsprotokoll für das Empfangen der Nachricht von der zweiten Vorrichtung (150) nutzt und/oder
- ein funkbasiertes Kommunikationsprotokoll für das Übermitteln der Anforderung an die Steuereinheit (131) nutzt.

5. Verfahren nach einem der Ansprüche 1 bis 4, wobei die zweite Vorrichtung (150)
- ein tragbares elektronisches Gerät, insbesondere ein tragbares elektronisches Gerät eines Zustellers, ist und insbesondere ein Handscanner ist oder
- ein mobiles Kommunikationsgerät ist.

6. Verfahren nach einem der Ansprüche 1 bis 5, wobei die Steuereinheit (131)
- ortsfest angebracht ist und/oder
- ein Server eines Heimautomatisierungssystems ist und/oder
- ein Server einer zentralen Schließanlage eines Gebäudes ist.

7. Verfahren nach einem der Ansprüche 1 bis 6, wobei die empfangene Nachricht zumindest einen Parameter enthält, durch den die Berechtigung zeitlich limitiert wird.

8. System umfassend eine erste Vorrichtung (10) und eine von der ersten Vorrichtung separate Steuereinheit (131) jeweils umfassend Mittel (11-16) zur Ausführung des Verfahrens nach einem der Ansprüche 1 bis 7.

## Claims

1. A method in a system for delivering and/or picking up shipments, the method comprising:
- obtaining a message by a first apparatus (10) from a second apparatus (150), which is used to request the causing of an action,
- checking, by the first apparatus (10), the authorization for the request on the basis of the obtained message,
- checking, by the first apparatus (10), whether the action is an action that is to be performed or caused by the first apparatus (10) or an action that comprises enabling access to a secured area and that is to be caused by a control unit (131) that is separate from the first apparatus (10), wherein the first apparatus (10) is an access control apparatus of a parcel box or a parcel butler or an access control apparatus for a parcel box or parcel butler, and wherein the control unit (131) is a control unit of a home automation system (130) or a control unit of a central locking system of a building, and
- if it is established that authorization exists and that the action is to be caused by the control unit (131), transmitting, by the first apparatus (10), a request to the control unit (131) to cause the action, and
- causing of the action in response to obtaining the request of the first apparatus (10) by the control unit (131).

2. The method according to Claim 1, wherein the checking of the authorization for the request comprises the following:
- decrypting encrypted data contained in the message, and comparing the decrypted data with unencrypted data, wherein the unencrypted data are likewise contained in the obtained message, derived from contained data and/or stored in the first apparatus (10); and/or
- checking a digital signature contained in the message for data contained in the message on the basis of the data contained in the message.

3. The method according to any of Claims 1 and 2, wherein an action that is to be caused by the control unit (131) comprises one of the following actions:
- enabling access to a secured area, the area not being a parcel box receiving area, a letterbox receiving area or a parcel butler receiving area;
- opening or releasing a door or a gate; and
- opening or releasing a door, the door not being a parcel box door or a letterbox door.

4. The method according to any of Claims 1 to 3, wherein the first apparatus (10)
- is fitted at a fixed location and/or
- is a locking system of the parcel box or the parcel butler and/or
- is fitted in or on the parcel box or the parcel butler -and/or
- comprises a locking mechanism, a processor (11), a memory (12) and two communication interfaces (14, 15) and/or
- uses a first communication protocol for receiving the message from the second apparatus (150) and a second, different communication protocol for transmitting the request to the control unit (131) and/or
- uses a radio-based communication protocol for receiving the message from the second apparatus (150) and/or
- uses a radio-based communication protocol for transmitting the request to the control unit (131).

5. The method according to any of Claims 1 to 4, wherein the second apparatus (150)
- is a portable electronic device, in particular a portable electronic device of a delivery agent, particularly a hand-held scanner or
- is a mobile communication device.

6. The method according to any of Claims 1 to 5, wherein the control unit (131)
- is fitted at a fixed location and/or
- is a server of a home automation system and/or
- is a server of a central locking system of a building.

7. The method according to any of Claims 1 to 6, wherein the received message contains at least one parameter that limits the time for the authorization.

8. A system comprising a first apparatus (10) and a control unit (131) that is separate from the first apparatus each comprising means (11-16) for performing the method of any of Claims 1 to 7.

## Revendications

1. Procédé dans un système de distribution et/ou de retrait d'envois, le procédé comprenant :
- la réception d'un message par un premier dispositif (10) provenant d'un deuxième dispositif (150), avec lequel le déclenchement d'une action est demandé,
- le contrôle, par le premier dispositif (10), de l'autorisation de la demande à l'aide du message reçu,
- le contrôle, par le premier dispositif (10), pour déterminer si l'action est une action qui doit être effectuée ou déclenchée par le premier dispositif (10) ou une action qui comprend le déblocage d'un accès à une zone sécurisée et qui doit être déclenchée par une unité de commande (131) séparée du premier dispositif (10), dans lequel le premier dispositif (10) est un dispositif de contrôle d'accès d'une boîte à paquets (10) ou d'une boîte aux lettres pour les colis (de type Paketbutler) ou un dispositif de contrôle d'accès pour une boîte à paquets (10) ou une boîte de type Paketbutler, et dans lequel l'unité de commande (131) est une unité de commande d'un système domotique (130) ou d'une installation de fermeture centrale d'un bâtiment, et
- s'il est constaté qu'une autorisation est présente et que l'action doit être déclenchée par l'unité de commande (131), la transmission, par le premier dispositif (10), d'une demande à l'unité de commande (131) à déclencher l'action, et
- le déclenchement de l'action à réception de la demande du premier dispositif (10) par l'unité de commande (131).

2. Procédé selon la revendication 1, dans lequel le contrôle de l'autorisation de la demande comprend ce qui suit :
- le décryptage de données cryptées contenues dans le message et la comparaison des données décryptées aux données non cryptées, dans lequel les données non cryptées sont contenues également dans le message reçu, sont déduites de données contenues et/ou sont stockées dans le premier dispositif (10), et/ou
- la vérification d'une signature numérique contenue dans le message pour les données contenues dans le message à l'aide des données contenues dans le message.

3. Procédé selon l'une quelconque des revendications 1 et 2, dans lequel une action qui doit être déclenchée par l'unité de commande (131) comprend une des actions suivantes :
- le déblocage d'un accès à une zone sécurisée, dans lequel la zone n'est pas une zone de réception de boîte à paquets, n'est pas une zone de réception de boîte aux lettres, et n'est pas une zone de réception de boîte de type Paketbutler ;
- l'ouverture ou le déblocage d'une porte ou d'un portail ; et
- l'ouverture ou le déblocage d'une porte, dans lequel la porte n'est pas une porte à boîte à paquets et n'est pas une porte à boîte aux lettres.

4. Procédé selon l'une quelconque des revendications 1 à 3, dans lequel le premier dispositif (10)
- est installé de manière stationnaire, et/ou
- est un système de fermeture de la boîte à paquets ou de la boîte de type Paketbutler, et/ou
- est installé dans ou sur la boîte à paquets ou la boîte de type Paketbutler, et/ou
- comprend un mécanisme de fermeture, un processeur (11), un système de stockage (12) et deux interfaces de communication (14, 15), et/ou
- utilise un premier protocole de communication pour la réception du message provenant du deuxième dispositif (150) et un autre deuxième protocole de communication pour la transmission de la demande à l'unité de commande (131), et/ou
- utilise un protocole de communication radio pour la réception du message provenant du deuxième dispositif (150), et/ou
- utilise un protocole de communication radio pour la transmission de la demande à l'unité de commande (131).

5. Procédé selon l'une quelconque des revendications 1 à 4, dans lequel le deuxième dispositif (150) est
- un appareil électronique portatif, en particulier un appareil électronique portatif d'un expéditeur, et en particulier un scanner manuel, ou
- un appareil de communication mobile.

6. Procédé selon l'une quelconque des revendications 1 à 5, dans lequel l'unité de commande (131)
- est installée de manière stationnaire, et/ou
- est un serveur d'un système domotique, et/ou
- est un serveur d'une installation de fermeture centrale d'un bâtiment.

7. Procédé selon l'une quelconque des revendications 1 à 6, dans lequel le message reçu contient au moins un paramètre, par lequel l'autorisation est limitée dans le temps.

8. Système comprenant un premier dispositif (10) et une unité de commande (131) séparée du premier dispositif comprenant respectivement des moyens (11-16) pour exécuter le procédé selon l'une quelconque des revendications 1 à 7.
